# FASCICULE DE BREVET EUROPEEN

(11) **EP 3 693 862 B1**
(45) Date de publication et mention de la délivrance du brevet: **22.09.2021**
(21) Numéro de dépôt: 20152919.5
(22) Date de dépôt: 21.01.2020
(51) Int. Cl.: G06F 12/0864, G06F 9/4401, G06F 12/128, G06F 12/14, G06F 21/55

(54) **PROCÉDÉ DE GESTION D'UNE MÉMOIRE CACHE D'UN CALCULATEUR ÉLECTRONIQUE**
VERFAHREN ZUM VERWALTEN EINES CACHE-SPEICHERS EINES ELEKTRONISCHEN COMPUTERS
METHOD FOR MANAGING A CACHE MEMORY OF AN ELECTRONIC COMPUTER

(30) Priorité: 11.02.2019 FR 1901312
(43) Date de publication de la demande: 12.08.2020
(73) Titulaire: Commissariat à l'Énergie Atomique et aux Énergies Alternatives, 75015 Paris (FR)
(72) Inventeur: HISCOCK, Thomas, 38054 GRENOBLE CEDEX 09 (FR); EL MAJIHI, Mustapha, 38054 GRENOBLE CEDEX 09 (FR); SAVRY, Olivier, 38054 GRENOBLE CEDEX 09 (FR)
(74) Mandataire: Colombo, Michel

(56) Documents cités:
- JP-A- 2012 023 618
- US-A1- 2012 297 110
- US-A1- 2016 170 889
- US-A1- 2018 046 808
- ZHENGHONG WANG ET AL: "New cache designs for thwarting software cache-based side channel attacks", ACM SIGARCH COMPUTER ARCHITECTURE NEWS, ACM SPECIAL INTEREST GROUP ON COMPUTER ARCHITECTURE, 2 PENN PLAZA, SUITE 701 NEW YORK NY 10121-0701 USA, vol. 35, no. 2, 9 juin 2007 (2007-06-09), pages 494-505, XP058224816, ISSN: 0163-5964, DOI: 10.1145/1273440.1250723

## Description

L'invention concerne un procédé et une unité de gestion d'une mémoire cache d'un calculateur électronique.

Les mémoires caches sont utilisées pour qu'un processus exécuté par un microprocesseur puisse accéder plus rapidement à des informations enregistrées initialement dans la mémoire principale.

Dans cette demande, par « processus », on désigne aussi bien un programme qu'une routine de ce programme ou tout autre logiciel exécuté par le microprocesseur et susceptible de lire ou d'écrire dans la mémoire cache.

L'état de la mémoire cache dépend fortement des adresses qui ont été accédées par le ou les processus exécutés par le microprocesseur. Par ailleurs, l'état de la mémoire cache à un instant donné peut assez facilement être observé par un processus tiers exécuté par le microprocesseur notamment en mesurant les temps d'accès à la mémoire cache.

Ces caractéristiques d'une mémoire cache ont été exploitées pour développer des attaques connues sous le terme de « attaques par canaux auxiliaires » (« Side Channel Attack » en anglais). Ces attaques permettent de révéler des informations secrètes traitées par un processus exécuté ou de modifier le fonctionnement du processus exécuté pour contourner des mesures de sécurité. Par exemple, une information secrète est une clé cryptographique utilisée pour chiffrer ou déchiffrer des informations. Une mesure de sécurité est, par exemple, la saisie d'un code PIN.

Pour cela, un processus qui effectue une attaque par canaux auxiliaires à travers une mémoire cache observe l'état de la mémoire cache alors que le processus attaqué s'exécute pour déterminer la ou les adresses accédée(s) par ce processus attaqué. Les adresses accédées dépendent bien souvent de données secrètes traitées par le processus attaqué. Ainsi, connaître les adresses accédées par le processus attaqué permet d'obtenir des informations partielles ou totales sur ces données secrètes.

En général, ces attaques supposent l'exécution d'un processus malveillant en parallèle du processus attaqué. Ce processus malveillant doit pouvoir accéder à des adresses précises de la mémoire cache.

Pour augmenter la robustesse de la mémoire cache vis-à-vis de ces attaques, il a déjà été proposé de cloisonner la mémoire cache en plusieurs partitions distinctes associées chacune à un processus respectif. La partition associée à un processus particulier est alors uniquement accessible par ce processus et ne peut pas être lue ou écrite par les autres processus exécutés en parallèle par le calculateur électronique. Ainsi, un processus malveillant ne peut pas accéder à la partition d'un autre processus et ne peut donc pas obtenir des informations sur le fonctionnement de cet autre processus. Ainsi, le cloisonnement de la mémoire cache permet bien d'accroître la robustesse de la mémoire cache vis-à-vis des attaques par canaux auxiliaires dans lesquels un processus malveillant tente d'observer l'état de la mémoire cache. Toutefois, cette solution conduit aussi à un usage peu efficace de la mémoire cache car des zones libres dans une partition ne peuvent pas être exploitées par d'autres processus pour y enregistrer des informations.

Une solution intéressante pour remédier à ce dernier inconvénient tout en cloisonnant les accès à la mémoire cache a été proposée dans l'article suivant : Zhenghong Wang et Al.: « New cache designs for thwarting software cache-based side channel attacks », ACM SIGARCH Computer architecture news, volume 35, pages 494-505, 2017.

Cet article enseigne que lorsqu'un processus cherche à lire un mot à une adresse @r, il transmet une requête à la mémoire cache. Cette requête contient l'adresse @r. L'adresse @r contient une adresse @_{Si,r} d'un ensemble S_{i,r} de lignes de la mémoire cache susceptibles de contenir le mot recherché. L'adresse @_{Si,r} est alors transformée à l'aide d'une table préenregistrée de permutations en une adresse transformée @_{Si,t}. C'est cette adresse @_{Si,t} qui est alors utilisée pour rechercher le mot dans la mémoire cache et non pas l'adresse @_{Si,r}. Dans ce contexte, cet article enseigne que pour cloisonner les accès à la mémoire cache d'un premier et d'un second processus, lors d'une phase d'initialisation, il suffit de leur associer des tables de permutations différentes. Cette façon de cloisonner les accès à la mémoire cache limite l'existence de zones libres qui ne peuvent pas être exploitées par d'autres processus pour y enregistrer des informations.

Par contre, dans tous les cas, lorsqu'un cloisonnement des accès à la mémoire cache est mis en œuvre, les processus ne peuvent plus partager des données ou des instructions par l'intermédiaire de la mémoire cache. Dans ce cas, pour chaque mot qui doit être lu par un premier et un second processus, la mémoire cache doit comporter un exemplaire de ce mot dans chacune des partitions des premier et second processus. Cela augmente donc la redondance des données/instructions enregistrées dans la mémoire cache et diminue l'efficacité de l'usage de la mémoire cache. En particulier, la solution décrite dans l'article de Zhenghong Wang et AI ne permet pas de remédier à cet inconvénient.

Un autre état de la technique est connu de :
- US2016/170889A1,
- US2012/297110A1,
- US2018/046808A1,
- JP2012023618A.

L'invention vise à proposer un procédé de gestion de la mémoire cache d'un calculateur électronique qui conserve les avantages de celui décrit dans l'article de Zhenghong Wang et AI tout en autorisant un usage encore plus efficace de la mémoire cache.

À cet effet, l'invention a donc pour objet un procédé de gestion d'une mémoire cache conforme à la revendication 1.

Les modes de réalisation de ce procédé peuvent comporter une ou plusieurs des caractéristiques des revendications dépendantes.

L'invention a également pour objet une unité de gestion d'une mémoire cache d'un calculateur électronique.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un calculateur électronique équipé d'une mémoire cache ;
- la figure 2 est une illustration schématique de l'architecture d'une table de pages utilisée dans le calculateur de la figure 1;
- la figure 3 est une illustration schématique d'un premier mode de réalisation d'une unité de gestion de la mémoire cache du calculateur de la figure 1 ;
- la figure 4 est un organigramme d'un procédé de gestion de la mémoire cache du calculateur de la figure 1 ;
- la figure 5 est une illustration schématique d'un deuxième mode de réalisation possible de l'unité de gestion de la mémoire cache du calculateur de la figure 1 ;
- la figure 6 est une illustration schématique d'un troisième mode de réalisation possible de l'unité de gestion de la mémoire cache du calculateur de la figure 1.

Dans ces figures, les mêmes références sont utilisées pour désigner les mêmes éléments. Dans la suite de cette description, les caractéristiques et fonctions bien connues de l'homme du métier ne sont pas décrites en détail.

### Chapitre I : Exemples de modes de réalisation :

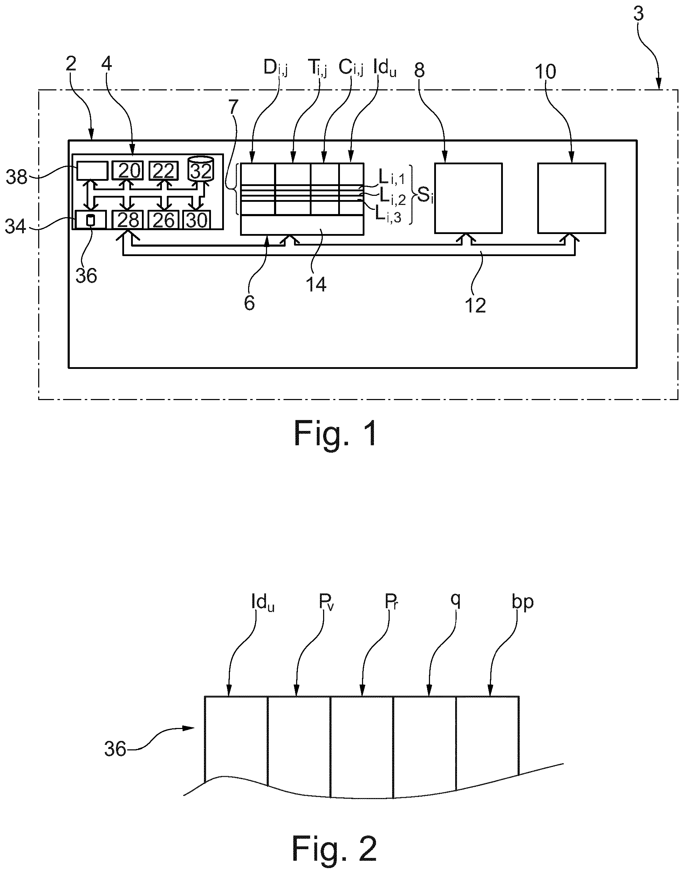

La figure 1 représente schématiquement l'architecture d'un calculateur électronique 2. Ce calculateur 2 est typiquement intégré dans un système 3 plus grand dont il contrôle et commande au moins une partie du fonctionnement. Le système 3 est par exemple un ordinateur, un téléphone mobile, un smartphone ou tout autre appareil électronique dont le fonctionnement est commandé, au moins en partie, par le calculateur 2.

Classiquement, le calculateur 2 comporte :
- au moins un microprocesseur 4,
- une mémoire cache 6,
- une mémoire principale 8,
- une mémoire de masse 10, et
- des bus 12 de transmission d'informations qui raccordent entre eux ces différents éléments du calculateur 2.

La mémoire cache 6 est typiquement plus rapide que la mémoire principale 8 qui est elle-même plus rapide que la mémoire de masse 10. La rapidité d'une mémoire correspond au temps d'accès nécessaire pour accéder à une information enregistrée dans cette mémoire. Actuellement, typiquement, le temps d'accès d'une mémoire cache est inférieur à 30 ns ou 20 ns et, généralement, supérieur à 1 ns. Le temps d'accès à une mémoire principale est aujourd'hui typiquement inférieur à 500 ns ou 100 ns et, généralement, supérieur à 30 ns ou 50 ns. Le temps d'accès à une mémoire de masse est aujourd'hui typiquement supérieur à 1 µs ou 10 µs et, généralement, inférieur à 10 ms.

Typiquement, la taille d'une mémoire du calculateur 2 est d'autant plus petite que cette mémoire est rapide pour des raisons de coûts de fabrication. Ainsi, la taille de la mémoire cache 6 est inférieure à la taille de la mémoire principale 8 qui est elle-même inférieure à la taille de la mémoire de masse 10. La taille d'une mémoire est exprimée en octets. La taille de la mémoire cache 6 est, par exemple, inférieure à 4 Mo et, habituellement supérieure à 60 ko. La taille de la mémoire principale 8 est habituellement supérieure à 256 Mo ou 1 Go et, généralement, inférieure ou égale à 16 Go ou 32 Go. La taille de la mémoire de masse 10 est quant à elle habituellement supérieure à 4 Go ou 1 To.

Ici, les mémoires du calculateur 2 sont classées par temps d'accès croissant. Ainsi, par la suite, l'expression « mémoire de rang supérieur » désigne une mémoire dont le temps d'accès est supérieur à la mémoire courante.

Généralement, les mémoires 6 et 8 sont des mémoires volatiles à accès aléatoire. Par exemple, la mémoire 6 est une mémoire de type SRAM (« Static Random Access Memory »). La mémoire principale 8 est par exemple une mémoire de type DRAM (« Dynamic Random Access Memory »).

La mémoire de masse 10 est généralement une mémoire non volatile. De nombreuses technologies différentes existent pour réaliser une telle mémoire de masse. Par exemple, la mémoire 10 peut être une bande magnétique, un disque dur, un disque optique tel qu'un CD, un DVD ou un disque Blue-ray, un disque magnéto-optique, une mémoire flash, une mémoire SSD (« Solid State Drive ») ou autres.

La mémoire 10 contient par exemple une copie de sauvegarde du code binaire des processus à exécuter par le microprocesseur 4. La mémoire 10 peut aussi contenir des copies des données à traiter par les différents processus susceptibles d'être exécutés par le microprocesseur 4. Typiquement, le code binaire des processus et les données à traiter sont, par exemple, chargés dans la mémoire 8 à partir de la mémoire 10 lors de la mise sous tension du calculateur 2 et/ou en réponse à une commande de réinitialisation du calculateur 2 ou lorsque l'exécution d'un nouveau processus par le calculateur 2 est déclenchée.

La mémoire 6 peut être une mémoire externe au microprocesseur 4 comme représenté sur la figure 1. Dans ce cas, la mémoire 6 est, par exemple, réalisée sur un substrat mécaniquement séparé du substrat sur lequel sont réalisés les différents éléments du microprocesseur 4.

La mémoire 6 est une mémoire cache qui peut être utilisée pour partager des mots entre différents processus simultanément exécutés par le microprocesseur 4. La mémoire 6 comporte généralement plusieurs niveaux de mémoire cache, connu sous l'expression "cache L1", "cache L2", "cache L3" et suivants. Les niveaux les plus bas, c'est-à-dire typiquement le niveau "cache L1", sont réservés à l'usage d'un seul processus exécuté par le microprocesseur 4. Par conséquent, ce sont généralement les niveaux plus élevés de la mémoire 6 qui sont utilisés pour partager des mots entre plusieurs processus. Par la suite, ce qui est décrit concerne seulement ce ou ces niveaux de la mémoire cache 6 utilisés pour partager des mots en lecture seule entre plusieurs processus. Ainsi, dans la suite de ce texte, sauf indication contraire, le terme "mémoire 6" désigne le niveau de la mémoire 6 qui est utilisé pour partager des mots en lecture seule entre plusieurs processus.

Dans ce texte, à défaut d'indication contraire, on désigne par le terme « mot » aussi bien :
- une instruction ou portion d'instruction du code binaire d'un processus exécutable par le microprocesseur 4, que
- une donnée ou portion de donnée correspondant à une opérande sur laquelle opère une instruction exécutée par microprocesseur 4.

La mémoire cache 6 sert de stockage intermédiaire entre la mémoire principale 8 et le microprocesseur 4. Au lieu d'accéder directement à la mémoire principale 8 qui présente des latences importantes, le microprocesseur 4 va d'abord chercher si le mot est présent dans la mémoire cache. Il existe alors les deux cas de figure suivants
- Cas 1) : Le mot est présent dans la mémoire cache 6, ce qui correspond au cas connu sous le terme « hit » ou « cache hit ». Dans ce cas, le mot est directement transféré au microprocesseur 4 à partir de la mémoire cache 6. Les mémoires de rang supérieur à la mémoire 6 ne sont alors pas accédées pour obtenir ce mot.
- Cas 2) : Le mot est absent de la mémoire cache 6. Ce cas de figure correspond à celui connu sous le terme anglais de « miss » ou « cache miss ». Dans ce cas, la mémoire cache doit aller chercher dans une mémoire de rang supérieur, c'est-à-dire ici typiquement dans la mémoire principale 8, le mot absent. Ce cas de figure est ici appelé « défaut de cache ». Le défaut de cache conduit donc naturellement à un temps d'accès plus important au mot recherché.

La mémoire cache 6 comporte typiquement un support 7 d'enregistrement d'informations. Le support 7 est divisé en plusieurs lignes L_{i,j} de longueur fixe. Chaque ligne comporte un champ D_{i,j} de données. Chaque champ D_{i,j} est divisé en Nₘ mots de longueur fixe. Les longueurs d'un mot, d'un champ et d'une ligne sont exprimées par le nombre de bits qui les composent. Par exemple, la longueur d'un mot est typiquement égale à 32 bits ou 64 bits. Par la suite, la description est faite dans le cas particulier où la longueur d'un mot est égale à 32 bits. Chaque champ D_{i,j} comporte un nombre identique de mots. Par exemple, ici, chaque champ D_{i,j} comporte quatre mots. Ainsi, la longueur du champ D_{i,j} est de 128 bits.

Les lignes de la mémoire cache 6 sont regroupées en ensembles distincts Sᵢ. Ces ensembles Sᵢ sont connus sous le terme anglais de « Set ». Chaque ensemble Sᵢ contient W lignes L_{i,j}. Le nombre W est le même pour tous les ensembles Sᵢ. Par la suite, l'indice « i » identifie sans ambiguïté un ensemble Sᵢ parmi les autres ensembles de lignes que comporte la mémoire 6. Par exemple, l'indice i est un numéro d'ordre compris entre 1 et s, où s est un nombre entier égal à T/(W.L), où :
- T est la taille de la mémoire cache exprimée en octets,
- L est le nombre d'octets par ligne, et
- W est le nombre de lignes dans chaque ensemble Sᵢ.

L'indice « j » identifie sans ambiguïté une ligne particulière d'un ensemble Sᵢ. Ici, l'indice j est compris entre 1 et W. Ceci est représenté sur la figure 1 dans le cas particulier où W est égal à trois.

Dans ce mode de réalisation, la mémoire 6 est une mémoire associative à W voies ("way" en anglais), plus connue sous l'expression anglaise de « W-way associative cache memory ». Dans ce cas, le nombre entier W est supérieur ou égal à deux et généralement inférieur à 128 ou 64 ou 16.

La position de chaque ensemble Sᵢ dans la mémoire cache 6 est repérée par une adresse @_{Si} appelée « adresse d'ensemble de lignes ». Il existe donc ici s adresses @_{Si} différentes d'ensemble de lignes. Par la suite, le nombre de bits minimum nécessaires pour coder l'adresse @_{Si} d'un ensemble Sᵢ est noté n et l'ensemble qui contient toutes les adresses @_{Si} possibles est noté Eₛ.

La position d'un mot particulier dans le champ D_{i,j} est repérée par un indice « dᵣ » qui identifie la position du mot dans cette ligne. L'indice dᵣ est un nombre compris entre 1 et Nₘ. Typiquement, les mots d'un même champ D_{i,j} sont placés immédiatement les uns derrière les autres.

En plus du champ D_{i,j}, chaque ligne L_{i,j} comporte :
- une étiquette de lignes T_{i,j} appelée « tag » en anglais,
- un compteur de lignes C_{i,j}, et
- un identifiant Idᵤ d'un processus.

L'étiquette T_{i,j} contient une valeur qui permet de sélectionner sans ambiguïté la ligne L_{i,j} qui contient le mot recherché parmi les W lignes L_{i,j} de l'ensemble Sᵢ. Pour cela, l'étiquette T_{i,j} est construite à partir des bits de l'adresse @rᵣ du mot recherché qui n'ont pas déjà été utilisés pour déterminer l'adresse @_{Si} de l'ensemble Sᵢ susceptible de contenir la ligne L_{i,j} et pour déterminer l'indice dᵣ. Par exemple, une fonction de hachage (« hash » en anglais) peut être appliquée à ces bits de l'adresse du mot recherché pour obtenir l'étiquette T_{i,j}.

Le compteur C_{i,j} contient une valeur qui permet de déterminer si la ligne L_{i,j} est obsolète ou non. La construction de la valeur du compteur C_{i,j} et son utilisation sont décrites plus en détail plus loin.

L'identifiant Idᵤ est l'identifiant du processus qui, lors de son exécution, a provoqué le chargement de la ligne L_{i,j} dans la mémoire 6.

Chaque ligne L_{i,j} peut comporter des champs additionnels comme un bit d'information qui permet de marquer cette ligne comme étant valide et, en alternance, invalide. Classiquement, une ligne L_{i,j} marquée comme invalide doit être traitée comme si elle ne contenait aucun mots. Ainsi, une ligne L_{i,j} marquée comme invalide est destinée à être effacée et remplacée par une autre ligne chargée depuis la mémoire principale 8.

Chaque ligne L_{i,j} peut aussi comporter un bit qui permet de marquer cette ligne L_{i,j} comme ayant été modifiée. Ce bit est souvent appelé "dirty" en anglais. Lorsqu'une ligne L_{i,j} est marquée comme modifiée, le champ D_{i,j} qu'elle contient est alors copié dans la mémoire principale 8 avant, par exemple, que cette ligne soit marquée comme invalide.

La mémoire cache 6 comporte aussi une unité électronique 14 de gestion. Cette unité 14 est notamment configurée pour :
- en réponse à une requête de lecture d'un mot dans la mémoire cache 6, envoyer le mot recherché à l'émetteur de la requête si ce mot a été trouvé dans la mémoire cache 6 et sinon, déclencher un défaut de cache, et
- en réponse à une requête d'écriture d'un mot dans la mémoire cache 6, remplacer l'ancienne valeur de ce mot enregistré sur le support 7 par sa nouvelle valeur et, dans le cas où le mot à écrire n'a pas pu être trouvé dans la mémoire cache 6, déclencher un défaut de cache.

Par exemple, lorsque l'unité 14 déclenche un défaut de cache, elle émet une requête vers une mémoire de rang supérieur, typiquement ici la mémoire principale 8, pour déclencher le chargement dans la mémoire cache 6 des lignes qui contiennent le mot recherché. L'unité 14 gère ensuite l'enregistrement des lignes qui lui sont fournies en réponse à sa requête.

Le microprocesseur 4 comporte ici notamment:
- une unité arithmétique et logique 20 ;
- un jeu 22 de registres ;
- un module de commande 26 ;
- une interface 28 d'entrée/sortie de données,
- un chargeur 30 d'instructions comportant un compteur ordinal,
- une file 32 d'instructions à exécuter,
- une unité 34 de gestion de mémoire virtuelle, et
- un générateur 38 de valeurs pour un paramètre q.

A titre d'illustration, le microprocesseur 4 est conforme à l'architecture RISC (« Restricted Instruction Set Computer »).

Le chargeur 30 charge dans la file 32 la prochaine instruction à exécuter par l'unité 20 à partir de la mémoire 6 ou d'une mémoire de rang supérieur. Plus précisément, le chargeur 30 charge l'instruction sur laquelle pointe le compteur ordinal.

L'unité 20 est notamment configurée pour exécuter les unes après les autres les instructions chargées dans la file 32. Les instructions chargées dans la file 32 sont généralement systématiquement exécutées dans l'ordre où ces instructions ont été enregistrées dans cette file 32. L'unité 20 est aussi capable d'enregistrer le résultat de l'exécution de ces instructions dans un ou plusieurs des registres du jeu 22.

Le module 26 est configuré pour déplacer des données entre le jeu 22 de registres et l'interface 28. L'interface 28 est notamment apte à lire des mots depuis la mémoire 6 et, en alternance, à écrire des mots dans la mémoire 6. Ici, pour lire un mot, le microprocesseur 4 génère et envoie par l'intermédiaire de l'interface 28 une requête de lecture de ce mot. Cette requête de lecture comporte notamment une adresse @rᵣ physique du mot à lire dans la mémoire principale 8.

L'adresse @rᵣ comporte à cet effet :
- une adresse @_{Si,r} d'un ensemble Sᵢ de la mémoire cache 6 susceptible de contenir le mot à lire ;
- un indice dᵣ qui identifie la position du mot à lire dans le champ D_{i,j} des W lignes L_{i,j} de l'ensemble Sᵢ identifié par l'adresse @_{Si,r,} et
- une étiquette Tᵣ qui permet de sélectionner sans ambiguïté, parmi l'ensemble des W lignes L_{i,j} de l'ensemble Sᵢ correspondant à l'adresse @_{Si,r,} la ligne qui contient le mot à lire si cette ligne existe.

L'étiquette Tᵣ est typiquement construite en mettant en œuvre le même algorithme que celui mis en œuvre pour construire chacune des étiquettes T_{i,j} enregistrées dans la mémoire cache 6. Ainsi, si l'une des lignes L_{i,j} de l'ensemble Sᵢ contient le mot à lire, son étiquette T_{i,j} est identique à l'étiquette Tᵣ. Cela permet de l'identifier sans ambiguïté comme étant la ligne qui contient le mot à lire parmi les W lignes L_{i,j} de l'ensemble Sᵢ.

Ce mode de réalisation est décrit dans le cas classique où un système de mémoire virtuelle est implémenté. Dans ce cas, l'espace mémoire de chaque processus exécuté correspond à une large plage continue d'adresses virtuelles. Lorsqu'un processus souhaite accéder en lecture ou en écriture à un mot enregistré dans la mémoire principale 8, l'adresse virtuelle @rᵥ de ce mot est convertie en une adresse physique @rᵣ de ce mot dans la mémoire principale 8. C'est l'unité 34 qui se charge de cette conversion. Cette unité 34 est connue sous l'acronyme MMU (« Memory Management Unit »). Le principe général de fonctionnement de l'unité 34 est connu et, par la suite, seuls les détails nécessaires à la compréhension de l'invention sont décrits.

L'adresse virtuelle @rᵥ se compose classiquement de deux champs : un champ Pᵥ de page virtuelle et un décalage Oᵣ ("Offset" en anglais). Le champ Pᵥ est aussi appelé "numéro de page". Le champ Pᵥ identifie la page virtuelle dans laquelle se trouve le mot recherché. Une page virtuelle est une plage continue d'adresses. Toutes les pages virtuelles ont la même taille. La taille d'une page virtuelle est souvent supérieure à 1 Ko ou 2 Ko et, généralement, inférieure à 1GB. Ici, la taille d'une page est égale à 4 Ko. Le champ Pᵥ identifie la page virtuelle qui contient le mot recherché parmi l'ensemble des pages virtuelles de l'espace mémoire du processus. Le décalage Oᵣ identifie la position du mot recherché dans la page virtuelle.

Pour obtenir l'adresse physique @rᵣ du mot recherché à partir de son adresse virtuelle @rᵥ, l'unité 34 utilise une table 36 de pages. La table 36 est plus connue sous le terme anglais de "Page table". Par exemple, la table 36 est une table de pages inversée ("Inverted page table" en anglais). Chaque ligne de la table 36 est connue sous l'acronyme PTE ("Page Table Entry"). Un exemple de structure de cette table 36 est décrit plus en détail en référence à la figure 2.

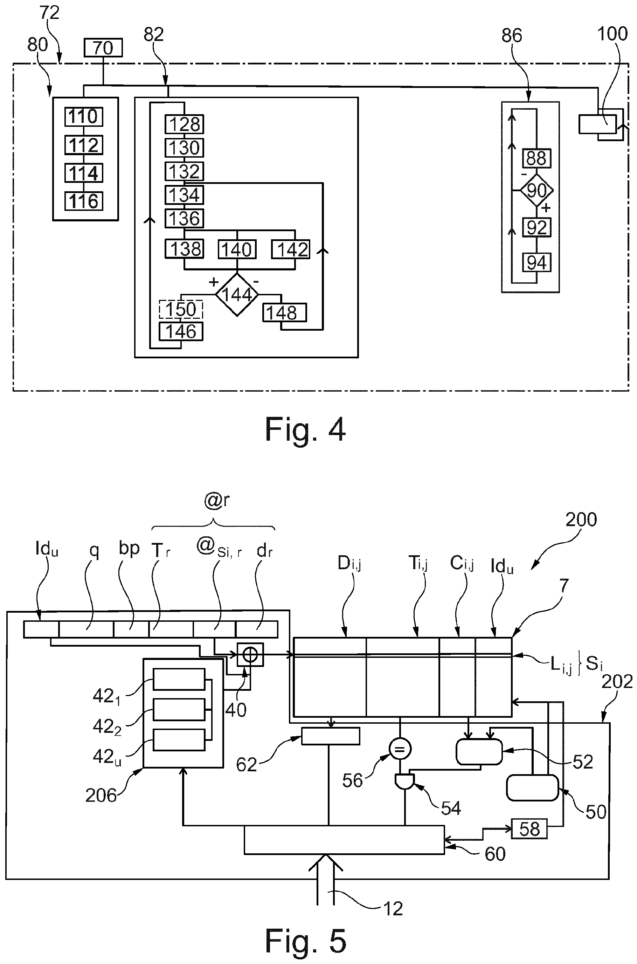

Le générateur 38 génère une nouvelle valeur d'un paramètre q à chaque fois qu'il est exécuté. Cette nouvelle valeur est enregistrée dans la table 36 à la place d'une précédente valeur du paramètre q mémorisée dans cette table. La fonction des valeurs du paramètre q enregistrées dans la table 36 est décrite plus loin en référence au procédé de la figure 4. Dans ce mode de réalisation, le générateur 38 tire de façon aléatoire ou pseudo-aléatoire chaque nouvelle valeur du paramètre q dans un ensemble E_{q} de 2ⁿ valeurs comprises entre 0 et 2ⁿ-1.

La figure 2 représente schématiquement la structure de la table 36. Seules cinq colonnes de la table 36 sont représentées. Sur la figure 2, chacune de ces colonnes est identifiée par le nom du champ qu'elle comporte. Les colonnes Idᵤ, Pᵥ et Pᵣ comportent donc, respectivement, l'identifiant Idᵤ du processus, le champ Pᵥ d'une page virtuelle et le champ Pᵣ d'une page physique correspondant au champ Pᵥ contenu sur la même ligne. Ainsi, à l'aide de la table 36, l'unité 34 est capable de construire l'adresse physique @rᵣ correspondant l'adresse virtuelle @rᵥ. Par exemple, l'adresse @rᵣ est obtenue en remplaçant le champ Pᵥ par le contenu du champ Pᵣ. Classiquement, le champ Pᵥ sert d'indice dans la table 36. Dans ce cas, puisque le numéro de la ligne de la table 36 est égal au contenu du champ Pᵥ, il n'est pas nécessaire de stocker la colonne Pᵥ dans la table 36. Toutefois, pour simplifier les explications suivantes, la description est faite comme si la colonne Pᵥ était stockée dans la table 36. En effet, cela ne change en rien l'enseignement technique de la présente demande de brevet.

Les colonnes q et bp comportent, respectivement, la valeur du paramètre q et la valeur d'un bit bp. Le bit bp indique que la page est partagée en lecture seule entre plusieurs processus lorsqu'il prend la valeur "1". Dans le cas contraire, le bit bp prend la valeur "0". Par exemple, le bit bp est égal à "0" lorsque seul le processus, correspondant à l'identifiant Idᵤ contenu sur la même ligne, utilise cette page ou lorsque la page est partagée en lecture et en écriture. Chacune des lignes de la table 36 forme donc une relation préenregistrée qui associe entre elles des valeurs des champs Idᵤ, Pᵥ, Pᵣ, q et bp.

La table 36 comporte aussi généralement d'autres colonnes supplémentaires qui n'ont pas été représentées comme, par exemple, une colonne qui contient un champ indiquant si la page demandée se trouve actuellement dans la mémoire 6 ou non. La table 36 peut aussi contenir dans ces colonnes supplémentaires les droits d'accès de la page, comme des droits en lecture, en écriture ou en exécution.

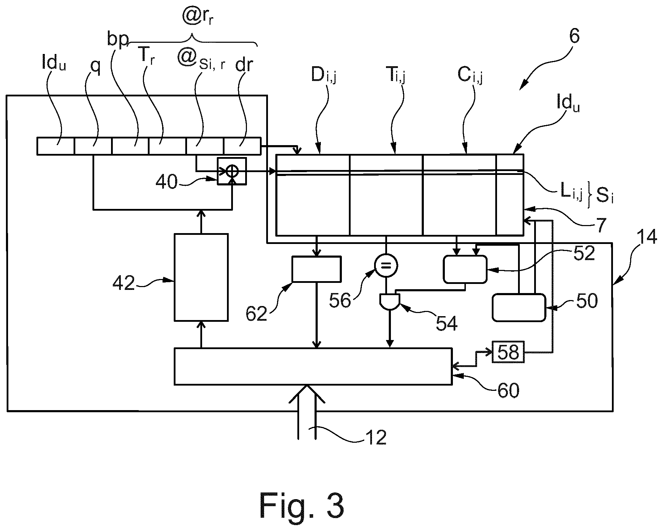

La figure 3 représente schématiquement un premier mode de réalisation possible pour l'unité 14 de gestion de la mémoire cache 6. L'unité 14 est configurée pour mettre en œuvre le procédé de gestion décrit plus en détail en référence à la figure 4.

L'unité 14 comporte des registres dans lesquels sont enregistrées les différentes données contenues dans la requête de lecture reçue par la mémoire 6. Ici, la requête de lecture contient l'identifiant Idᵤ, l'étiquette Tᵣ, l'adresse @_{Si,r}, l'indice dᵣ, la valeur du paramètre q et la valeur du bit bp. Sur cette figure, les registres contenant l'identifiant Idᵤ, l'étiquette Tᵣ, l'adresse @_{Si,r}, l'indice dᵣ, la valeur du paramètre q et la valeur du bit bp portent, respectivement, les références Idᵤ, Tᵣ, @_{Si,r}, dᵣ, q et bp.

L'unité 14 comporte une fonction 40 de transformation de l'adresse @_{Si,r} en une adresse @_{Si,t} d'ensemble transformée. La fonction 40 est une fonction bijective qui associe à chaque adresse @_{Si,r} une et une seule adresse @_{Si,t}. Une telle fonction 40 est connue sous le terme de "permutation". Ainsi, quelle que soit l'adresse @_{Si,t}, cette adresse @_{Si,t} appartient à l'ensemble Eₛ. Plus précisément, la fonction 40 est conçue pour permuter au moins Pₑ % des adresse @_{Si,r}. Autrement dit, la fonction 40 associe à plus de Pₑ % des adresse @_{Si,r} contenues dans l'ensemble Eₛ, une adresse @_{Si,t} dont la valeur est différente de la valeur de l'adresse @_{Si,r} à laquelle elle est associée par cette fonction 40. Ici, le nombre Pₑ est supérieur à 50 et, de préférence, supérieur à 80 ou 90 ou 95. Idéalement, Pₑ est égal à 100.

La fonction 40 est une fonction paramétrée par la valeur reçue du paramètre q. Ainsi, la valeur de l'adresse @_{Si,t} dépend non seulement de la valeur de l'adresse @_{Si,r} mais également de la valeur reçue du paramètre q. Dès lors, à chaque fois que la valeur du paramètre q est modifiée, la fonction 40 est modifiée, c'est-à-dire qu'elle associe une nouvelle adresse @_{Si,t} à une même adresse @_{Si,r}. A chaque fois que la valeur du paramètre q est modifiée, cette modification touche un groupe d'adresses @_{Si,r} contenant au moins Pₑ % des adresse @_{Si,r} de l'ensemble Eₛ. Ainsi, après avoir modifié la valeur du paramètre q, chacune des adresses @_{Si,r} de ce groupe est transformée, par la fonction 40, en une adresse @_{Si,t} différente de celle qui était obtenue avant la modification de la valeur du paramètre q.

Il existe un grand nombre de façons pour permuter des nombres d'un ensemble. Ici, la fonction 40 utilise simplement la relation suivante : @_{Si,t} = @_{Si,r} XOR q, où le symbole « XOR » est l'opération « ou exclusif ». Pour cela, la taille du paramètre q est ici égale à la taille de l'adresse @_{Si,r} et donc égale à n bits.

L'unité 14 comporte une file 42 contenant R registres. La taille de chacun des registres de la file 42 est égale à n bits. Cette file 42 fonctionne sur le principe du "premier entré, premier sorti" connu sous l'acronyme « FIFO » (« first in first out »). Dans ce mode de réalisation, la file 42 mémorise les R valeurs précédentes du paramètre q. Par "valeur précédente du paramètre q", on désigne une valeur du paramètre q reçue dans une précédente requête de lecture et utilisée pour paramétrer la fonction 40. Typiquement, le nombre R est un nombre entier compris 1 et LmaxR. La limite supérieure Lmax_{R} est, de préférence, égale à la valeur au-delà de laquelle le temps mis pour essayer de trouver un mot dans la mémoire cache 6 en utilisant successivement toutes les valeurs précédentes du paramètre q enregistrées dans la file 42 devient supérieure au temps nécessaire pour lire le mot recherché à partir de la mémoire principale 8. Dès lors, typiquement, le nombre R est inférieur à 50 et, généralement inférieur à 16 ou 10. Ici, le nombre R est choisi égal à 8.

L'unité 14 comporte aussi un compteur 50 de modifications de la fonction 40. Ce compteur 50 est incrémenté d'un pas régulier à chaque fois qu'une nouvelle valeur du paramètre q est reçue. Typiquement, le pas d'incrément est égal à un. Lorsque le compteur 50 atteint une limite maximale Lmax₅₀, il génère un signal de dépassement (« overflow » en anglais) et revient à sa valeur initiale, c'est-à-dire ici sa valeur nulle.

Dans ce mode de réalisation, la valeur de la limite Lmax₅₀ est supérieur au nombre R et, de préférence, très supérieure au nombre R. Par exemple, la limite Lmax₅₀ est choisie supérieure à 100 ou 500 ou 1000.

Le compteur 50 est raccordé à une entrée d'un comparateur 52. Le comparateur 52 compare la valeur actuelle du compteur 50 à la valeur du compteur de lignes C_{i,j} de la ligne sélectionnée à l'aide de l'adresse @_{Si,t}. En cas de concordance entre ces deux valeurs, le comparateur 52 envoie un signal de concordance à un circuit logique 54. Dans le cas contraire, le comparateur 52 envoie un signal d'absence de concordance au circuit 54. Ici, il y a concordance entre la valeur du compteur C_{i,j} et la valeur du compteur 50 seulement si la valeur du compteur C_{i,j} est inférieure ou égale à Cₘ et supérieure ou égale à Cₘ-M, où :
- Cₘ est la valeur actuelle du compteur 50, et
- M est un nombre entier constant, supérieur ou égale à zéro.

De préférence, le nombre M est choisi égal ou inférieur au nombre R. Ici, le nombre M est égal au nombre R. La valeur du compteur C_{i,j} d'une ligne L_{i,j} est égale à la valeur du compteur 50 au moment où cette ligne L_{i,j} a été enregistrée dans la mémoire cache 6. Ainsi, il y a concordance entre les valeurs du compteur C_{i,j} et du compteur 50 uniquement si, entre l'instant où la ligne L_{i,j} a été enregistrée dans la mémoire cache 6 et l'instant où le comparateur 52 compare les valeurs du compteur C_{i,j} et du compteur 50, la fonction 40 a été modifiée au maximum M fois.

Le circuit 54 comporte une autre entrée raccordée à une sortie d'un autre comparateur 56. Le comparateur 56 compare l'étiquette Tᵣ reçue aux étiquettes T_{i,j} des lignes de l'ensemble Sᵢ sélectionné à l'aide de l'adresse @_{Si,t}. Si l'une des étiquettes T_{i,j} de l'ensemble Sᵢ sélectionné correspond à l'étiquette T_{r,} alors un signal de sélection de cette ligne L_{i,j} comme étant celle qui contient le mot recherché est généré. Dans le cas contraire, c'est-à-dire qu'aucune des étiquettes T_{i,j} de l'ensemble Sᵢ sélectionné ne correspond à l'étiquettes Tᵣ, un signal d'absence de sélection est généré. Une étiquette T_{i,j} correspond à l'étiquette Tᵣ si ces deux étiquettes sont identiques.

Le signal de sélection est, en alternance, le signal d'absence de sélection et est reçu par le circuit 54.

Le circuit 54 transmet à un automate 60 un signal de succès qui indique qu'une ligne Lⱼ correspondant à l'adresse @rᵣ reçue a été trouvée uniquement si :
- pour cette ligne L_{i,j}, le comparateur 56 a généré un signal de sélection, et
- pour cette même ligne L_{i,j}, le comparateur 52 a généré un signal de concordance.

Ce signal de succès correspond donc au cas d'un « hit ». Dans les autres cas, un signal de défaut de cache est transmis à l'automate 60.

En parallèle du comparateur 56, l'unité comporte un extracteur 62 de mots. Cet extracteur 62 extrait du champ D_{i,j} de la même ligne L_{i,j} que celle actuellement traitée par le comparateur 56, le mot situé à la position repérée par l'indice reçu dᵣ.

L'unité 14 comporte aussi un détecteur 58 d'usages anormaux de la mémoire 6. Plus précisément, dans ce mode de réalisation, ce détecteur 58 est capable de détecter les trois usages anormaux suivants :
- Usage anormal 1) : un usage de l'instruction d'éviction explicite d'une ligne de la mémoire 6 par un processus non autorisé,
- Usage anormal 2) : une surcharge spatiale d'un ensemble Sᵢ, et
- Usage anormal 3) : une surcharge temporelle d'un ensemble Sᵢ.

Une instruction d'éviction explicite d'une ligne de la mémoire 6 est une instruction qui prend comme argument une adresse @rᵣ et qui provoque l'éviction systématique de la ligne située à cette adresse @rᵣ de la mémoire 6. La ligne ainsi évincée est par exemple systématiquement marquée comme étant invalide ce qui provoque son remplacement par une autre ligne chargée depuis la mémoire 8. Cette instruction d'éviction explicite est codée dans le code du processus exécuté par le microprocesseur 4. Elle correspond, par exemple, en assembleur, au mnémonique CLFLUSH lorsque le microprocesseur 4 est un microprocesseur de la société INTEL®. Ici, l'usage de l'instruction d'éviction explicite par un processus est considéré comme excessif si le nombre de fois où ce processus déclenche l'exécution de cette instruction dépasse un seuil prédéterminé S1.

L'usage anormal 2) correspond à la situation où un processus a provoqué le chargement, dans un même ensemble Sᵢ, d'un nombre de lignes supérieur à un seuil prédéterminé S2. Le seuil S2 est inférieur ou égal au nombre W. Le seuil S2 est typiquement supérieur à 0,6W ou 0,8W.

L'usage anormal 3) correspond à la situation où un processus accède à un même ensemble Sᵢ avec une fréquence supérieure à un seuil prédéterminé S3.

A cet effet, le détecteur 58 a accès aux identifiants Idᵤ des lignes sélectionnées avec l'adresse @_{Si,t} et communique avec l'automate 60.

L'automate 60 est notamment configuré pour :
- sélectionner les W lignes L_{i,j} de l'ensemble Sᵢ situé à l'adresse @_{Si,t} construite par la fonction 40 à partir de l'adresse @_{Si,r} reçue,
- si l'une des W lignes L_{i,j} sélectionnée déclenche un signal de sélection, alors l'automate 60 déclenche en réponse, dans le cas d'une requête en lecture, la transmission du mot extrait,
- charger à partir de la mémoire principale 8 et enregistrer dans la mémoire cache 6 un nouvel ensemble de lignes contenant le mot correspondant à l'adresse @rᵣ contenue dans la requête reçue si ce mot n'a pas pu être trouvé dans la mémoire cache 6,
- exécuter une instruction d'éviction explicite d'une ligne de la mémoire 6 et en informer le détecteur 58,
- déclencher la génération d'une nouvelle valeur du paramètre q lorsqu'un usage anormal de la mémoire 6 est détecté par le détecteur 58.

Le fonctionnement du calculateur 2 et de la mémoire cache 6 vont maintenant être décrits en référence au procédé de la figure 4. Ce fonctionnement est décrit dans le cas particulier ou deux processus partagent en lecture seule, au moins initialement, des mots enregistrés dans une même page physique. Cette page partagée est en lecture seule. Par exemple, les mots partagés en lecture seule sont des données et/ou des instructions d'une fonction exécutable commune. Les mots partagés sont enregistrés une seule fois dans la mémoire 6 et sont accessibles par les deux processus. Ainsi, l'usage de la mémoire 6 est optimisé. En effet, il n'est pas nécessaire d'enregistrer dans cette mémoire 6 une première copie des mots partagés pour l'un des deux processus et, à un endroit différent de la mémoire 6, une seconde copie de ces mêmes mots pour l'autre des deux processus.

Le cas d'une page partagée en écriture n'est pas traité ici. En effet, lorsqu'une page est partagée en écriture entre plusieurs processus, il n'est pas possible d'appliquer à cette page des techniques de cloisonnement de la mémoire cache. Par conséquent, soit le partage d'une page en écriture est interdit soit on s'assure que la page partagée en écriture ne contient pas de données ou des instructions sensibles. Par conséquent, dans ce procédé les accès aux pages partagées en écriture sont, par exemple, réalisés de façon conventionnelle. Pour cela, la fonction 40 n'est pas utilisée et, par exemple, c'est directement l'adresse @_{Si,r} qui est utilisée pour sélectionner les lignes qui comportent le mot recherché. Les accès en écriture à la mémoire 6 ne sont donc pas décrits par la suite.

Les pages de la mémoire 6 qui ne sont pas partagées entre plusieurs processus ne posent pas non plus de problème particulier de sécurité. Ainsi, dans ce procédé, par exemple, les accès aux pages non-partagées sont aussi réalisés de façon conventionnelle. Ils ne sont donc pas décrits par la suite.

Lors d'une phase 70 d'initialisation, le générateur 38 génère une valeur initiale du paramètre q pour chacune des lignes de la table 36. Lors de cette phase, une valeur différente du paramètre q est générée et associée à chaque page physique différente. Par contre, lors de la phase 70, les pages physiques qui sont partagées en lecture seule entre plusieurs processus sont associées à la même valeur du paramètre q. Comme expliqué plus loin, cela permet, par défaut, un usage efficace de la mémoire 6 en limitant la redondance des mots enregistrés dans ces pages partagées en lecture.

Ensuite, une phase 72 d'exécution simultanée de plusieurs processus par le calculateur 2 est déclenchée. Le calculateur 2 a ici la capacité d'exécuter simultanément plusieurs processus. Pour cela, par exemple, le calculateur 2 exécute un système d'exploitation qui permet d'ordonnancer dans le temps l'exécution simultanée de ces différents processus par le microprocesseur 4. Grâce à cela, tous les processus sont exécutés en alternance par ce même microprocesseur 4. De même, la mémoire cache 6 est accessible et utilisable par tous les processus simultanément exécutés.

L'exécution de plusieurs processus par un microprocesseur est bien connue de l'homme du métier. Ainsi, seuls les accès et la gestion de la mémoire cache 6 sont décrits plus en détail par la suite. Plus précisément, on décrit par la suite :
- une étape 80 d'enregistrement de lignes L_{i,j} dans la mémoire cache 6, puis
- une étape 82 d'accès en lecture.

De plus, en parallèle de ces étapes 80 et 82, au cours de l'exécution des processus par le microprocesseur 4, l'unité 14 exécute une étape 86 de surveillance de l'usage de la mémoire 6.

Lors de l'étape 86, à chaque accès à une page partagée en lecture seule de la mémoire 6 par un processus u, le détecteur 58 met à jour, lors d'une opération 88, les valeurs de trois indicateurs I₁ᵤ, I_{2u,i} et I_{3u,i} associées spécifiquement au processus u qui accède à cette page partagée en lecture seule. Par la suite, l'indice "u" est utilisé pour identifier le processus u. Il existe donc autant d'indicateurs I₁ᵤ, I_{2u,i} et I_{3u,i} que de processus en cours d'exécution par le microprocesseur 4 et qui partagent des mots contenus dans des pages en lecture seule. Les indicateurs I_{1u,} I_{2u,i} et I_{3u,i} sont construits pour détecter les usages anormaux, respectivement, 1), 2) et 3).

À chaque fois qu'un processus u accède à une page partagée de la mémoire 6, la valeur du bit bp associée à cette page et la valeur de l'identifiant Idᵤ de ce processus sont transmis à la mémoire 6. Ainsi, l'unité 14 sait si l'accès en lecture est un accès à une page partagée en examinant la valeur reçue du bit bp. L'unité 14 connaît aussi la valeur de l'identifiant Idᵤ et peut donc sélectionner les indicateurs I₁ᵤ, I_{2u,i} et I_{3u,i} correspondant à l'identifiant Idᵤ reçu. Ici, les indicateurs I₁ᵤ, I_{2u,i}, I_{3u,i} sont mis à jour uniquement si la valeur reçue du bit bp est égale à 1.

L'indicateur I₁ᵤ est incrémenté d'un pas prédéterminé à chaque fois que le processus u exécute une instruction d'éviction explicite. Par exemple, le pas prédéterminé est égal à 1.

L'indicateur I_{2u,i} est pris égal au nombre de lignes de l'ensemble Sᵢ qui sont associées à l'identifiant Idᵤ du processus u qui accède à l'une des lignes de cet ensemble Sᵢ.

Un indicateur I_{3u,i} est associé à chaque ensemble Sᵢ de la mémoire 6 et à chaque valeur de l'identifiant Idᵤ. L'indicateur I_{3u,i} est représentatif de la fréquence des accès aux lignes de l'ensemble Sᵢ par le processus u. Ici, l'indicateur I_{3u,i} est par exemple mis à jour de la façon suivante :
- à chaque fois qu'un processus différent du processus u accède à l'ensemble Sᵢ, la valeur de l'indicateur I_{3u,i} est décrémenté d'un pas prédéterminé, par exemple égal à 1, et
- à chaque fois que le processus u accède à une ligne de l'ensemble Sᵢ, la valeur de l'indicateur I_{3u,i} est incrémenté d'un pas prédéterminé, par exemple, égal à 1.

Ensuite, lors d'une opération 90, les indicateurs I₁ᵤ, I_{2u,i} et I_{3u,i} sont comparés, respectivement, aux seuils prédéterminés S1, S2 et S3. Si les valeurs d'aucun de ces indicateurs I₁ᵤ, I_{2u,i} et I_{3u,i} ne dépassent ces seuils S1, S2 et S3, alors aucun usage anormal de la mémoire 6 par le processus u n'est détecté. Le procédé retourne alors à l'opération 88 sans déclencher une modification d'une valeur du paramètre q.

Si la valeur mise à jour d'un des indicateurs I_{1u,} I_{2u,i} et I_{3u,i} dépasse l'un de ces seuils S1, S2 et S3, alors, lors d'une opération 92, le détecteur 58 détecte un usage anormal de la mémoire 6 par le processus u. Il déclenche alors la génération d'une nouvelle valeur pour le paramètre q. Ici, à cet effet, il informe le microprocesseur 4 qu'un usage anormal de la mémoire 6 par le processus u a été détecté. De plus, lors de l'opération 92, la valeur du paramètre q est enregistrée dans la file 42. En parallèle, le compteur 50 est incrémenté.

En réponse, lors d'une opération 94, le microprocesseur 4 modifie immédiatement la valeur du paramètre q associée, dans la table 36, à l'identifiant Idᵤ de ce processus u et au champ Pᵣ de la page partagée. Par contre, la valeur du paramètre q associée dans la table 36 au même champ Pᵣ et à des identifiants d'autres processus, n'est pas modifiée. Plus précisément, lors de l'opération 94, le générateur 38 génère de façon aléatoire ou pseudo-aléatoire une nouvelle valeur pour le paramètre q. Ensuite, l'unité 34 remplace la valeur actuelle du paramètre q de la ligne contenant l'identifiant Idᵤ du processus u et le champ Pᵣ de page par cette nouvelle valeur du paramètre q.

Le fait de modifier seulement la valeur du paramètre q associée au processus u permet de cloisonner :
- les accès du processus u à cette page partagée, et
- les accès à cette même page par les autres processus en cours d'exécution qui partagent avec ce processus u l'accès en lecture à cette page.

Plus précisément, la modification de la valeur du paramètre q modifie complètement la manière dont le processus u accède à cette page partagée, ce qui augmente la robustesse du procédé vis-à-vis des attaques par canaux auxiliaires. En effet, chaque modification d'une valeur du paramètre q associé à un processus u impacte simultanément la majorité des adresses d'ensemble de la page partagée. Ainsi, pour accéder à cette page partagée, l'adressage de la mémoire cache 6 avant la modification de la valeur du paramètre q est très différent de l'adressage de la mémoire 6 après cette modification. Dès lors, cela rend très difficile la mise en œuvre des attaques par canaux auxiliaires qui essaient d'obtenir des informations secrètes à partir de l'observation des valeurs des adresses accédées par un processus dans cette page.

Par exemple, lors d'une première opération, le processus u exécuté par le microprocesseur 4 lit un mot M₁ à une adresse @rᵣ₁. L'adresse @rᵣ₁ contient l'étiquette Tᵣ, l'adresse @_{Si,r} et l'indice dᵣ. L'adresse @_{Si,r} est transformée, par la fonction 40, en une adresse @_{S1,t}. Cette requête déclenche ainsi un accès à des premières lignes L_{1,j} d'un ensemble S_{1,t} situé dans la mémoire 6 à l'adresse @_{S1,t}. Ultérieurement, le détecteur 58 détecte un usage anormal de la mémoire 6 par ce processus u ce qui déclenche l'exécution de l'opération 94. Dès lors, lors des opérations suivantes de lecture du mot M₁ par ce processus u, la valeur du paramètre q contenue dans la requête de lecture a été modifiée. Après cette modification, l'adresse @_{Si,r} est transformée, par la fonction 40, en une adresse @_{S2,t} différente de l'adresse @_{S1,t}. La même opération de lecture du mot M₁ déclenche donc un accès à des secondes lignes L_{2,j} d'un second ensemble S_{2,t} situé à l'adresse @_{S2,t}. Il est donc plus difficile d'obtenir une information sur le type et la nature des informations accédées en mémoire cache en observant seulement les accès à cette mémoire cache 6.

Suite à cette modification de la valeur du paramètre q pour le processus u, le mot qui auparavant était recherché dans l'ensemble S_{1,t} est maintenant recherché dans l'ensemble S_{2,t}. Toutefois, les lignes de l'ensemble S_{1,t} ne sont pas déplacées vers l'ensemble S_{2,t} à chaque fois que la fonction 40 est modifiée. Seules l'adressage de la mémoire cache est modifié. Cela conduit à la situation suivante : avant la modification de la valeur du paramètre q, le mot recherché correspondant à l'adresse @rᵣ₁ a été enregistré dans l'ensemble S_{1,t}. Dès lors, avant la modification de la valeur du paramètre q, ce mot est rapidement retrouvé dans la mémoire cache à partir de l'adresse @rᵣ₁ car la fonction 40 permet d'obtenir l'adresse @_{S1,t} à partir de l'adresse @_{Si,r}. Après la modification de la valeur du paramètre q, pour la même adresse @rᵣ₁, la fonction 40 génère une autre adresse @_{S2,t} différente de l'adresse @_{S1,t}. Puisque les lignes de l'ensemble S_{1,t} n'ont pas été déplacées vers l'ensemble S_{2,t}, le mot recherché ne se trouve pas dans l'ensemble S_{2,t} et un défaut de cache est déclenché.

Un premier effet secondaire lié à la modification de la valeur du paramètre q est donc que cela accroît le nombre de défauts de cache pendant une période de temps qui suit immédiatement la modification de cette valeur. Cela ralentit temporairement l'exécution des processus pendant cette période.

On notera que déplacer les lignes de l'ensemble S_{1,t} vers l'ensemble S_{2,t} aurait évité ce défaut de cache. Toutefois, comme précédemment indiqué, la modification de la valeur du paramètre q affecte la majorité des adresses d'ensemble. Pour éviter ce défaut de cache, à chaque fois que la valeur du paramètre q est modifiée, il faudrait donc déplacer un nombre important de lignes de la mémoire cache 6. En pratique, un tel déplacement d'un nombre important de lignes de la mémoire cache prend beaucoup de temps et ralentirait de façon inacceptable l'exécution des processus par le calculateur 2. En fait, un tel déplacement de lignes est pire que le premier effet secondaire indiqué ci-dessus.

Un second effet secondaire lié à l'absence de déplacement des lignes de la mémoire cache 6 est que, suite à une modification de la valeur du paramètre q, il peut exister plusieurs exemplaires de la même ligne à différents emplacements dans la mémoire cache. Or, certains de ces exemplaires peuvent contenir des données obsolètes. Ceci est illustré dans le cas des ensembles S_{1,t} et S_{2,t} précédemment introduits. Avant la modification de la valeur du paramètre q, l'ensemble S_{1,t} contient un exemplaire de la ligne L_{1,j} qui comporte le mot recherché. L'ensemble S_{2,t} ne comporte pas d'exemplaire de cette ligne L_{1,j}. Après la modification de la valeur du paramètre q, la recherche du mot correspondant à l'adresse @rᵣ₁ dans l'ensemble S_{2,t} par le processus u provoque un défaut de cache. Classiquement, en réponse à ce défaut de cache, une ligne L_{2,j} contenant le mot M₁ recherché est transférée de la mémoire principale 8 vers la mémoire cache 6 et enregistrée dans l'ensemble S_{2,t}. Dès lors, à partir de ce moment-là, la mémoire cache 6 comporte deux exemplaires du même mot M₁, l'un étant contenu dans la ligne L_{1,j} et l'autre étant contenu dans la ligne L_{2,j}. Étant donné que la ligne L_{2,j} a été chargée dans la mémoire 6 après la ligne L_{1,j}, les mots M₁ qu'elles contiennent peuvent être différents. Par exemple, cela peut être le cas si, entre le chargement des lignes L_{1,j} et L_{2,j}, ce mot M₁ a été modifié dans la mémoire 8 par un processus tiers disposant des droits d'accès nécessaire pour faire cela. Supposons maintenant qu'après plusieurs modifications ultérieures de la valeur du paramètre q associée au processus u, la fonction 40 associe de nouveau l'adresse @_{Si,r} aux lignes de l'ensemble S_{1,t}. À ce moment-là, en réponse à une requête en lecture du mot situé à l'adresse @rᵣ₁, la mémoire cache 6 retournera au processus u une valeur obsolète du mot M₁ contenu dans la ligne L_{1,j}.

Comme cela sera compris à la lecture de la suite de la description, l'utilisation de la file 42 permet de minimiser le premier effet secondaire tandis que l'utilisation du compteur 50 et des compteurs C_{i,j} permet de minimiser le second effet secondaire.

Également en parallèle des étapes 80, 84 et 86, le procédé comporte une étape 100 de réinitialisation de la mémoire cache 6. L'étape 100 est déclenchée à chaque fois que l'automate 60 reçoit le signal de dépassement, c'est-à-dire à chaque fois que le compteur 50 atteint la limite Lmax₅₀. Lors de l'étape 100, le compteur 50 est réinitialisé à sa valeur nulle. De plus, l'automate 60 marque l'ensemble des lignes de la mémoire cache 6 comme étant invalides. En effet, suite à la réinitialisation de la valeur du compteur 50, les valeurs des compteurs C_{i,j} ne permettent plus de distinguer sûrement une ligne obsolète d'une ligne non-obsolète. Le marquage de chaque ligne comme étant invalide provoque un nouveau chargement de toutes les lignes de la mémoire cache à partir de la mémoire principale 8 et, à cette occasion, la mise à jour des valeurs des compteurs C_{i,j} associés à chacune des lignes.

L'exécution de l'étape 80 est typiquement déclenchée en cas de défaut de cache, c'est-à-dire dans le cas où le mot dont l'adresse @rᵣ est spécifiée dans la requête de lecture n'a pas pu être trouvé dans la mémoire cache 6.

Dans ce cas, lors d'une opération 110, l'automate 60 déclenche le chargement dans la mémoire cache 6, à partir de la mémoire principale 8, d'un ensemble de X lignes dont l'une d'elle contient le mot recherché. Le nombre X peut être égal, supérieur ou inférieur au nombre s d'ensembles Sᵢ. Ici, le nombre X est inférieur ou égale au nombre s. Classiquement, cet ensemble de X lignes est un ensemble de X lignes immédiatement contiguës les unes à côté des autres dans la mémoire principale 8. Cette opération de transfert de cet ensemble de X lignes de la mémoire principale 8 vers la mémoire cache 6 est réalisée de façon classique et n'est donc pas décrite plus en détail.

Lors d'une opération 112, l'unité 14 enregistre les X lignes transférées depuis la mémoire principale 8 à la place de X lignes de la mémoire cache 6. Ici, ces X lignes sont chacune enregistrée dans un ensemble Si respectif. En particulier, la ligne qui contient le mot recherché est enregistrée dans l'ensemble Sᵢ situé à l'adresse @_{Si,t}. L'adresse @_{Si,t} est l'adresse transformée obtenue à partir de l'adresse @_{Si,r} contenue dans la requête de lecture qui a déclenché le défaut de cache. L'adresse @_{Si,t} est obtenue à l'aide de la fonction 40 paramétrée avec la valeur du paramètre q contenue dans cette même requête en lecture. De façon similaire, l'adresse @_{Si} de l'ensemble Sᵢ dans lequel doit être enregistré une autre de ces X lignes est déterminée pour que la lecture ultérieure d'un mot dans cette ligne ne provoque pas, si possible, un défaut de cache. Pour cela, l'adresse @_{Si} est elle aussi déterminée à l'aide de la fonction 40 paramétrée avec la valeur du paramètre q contenue dans la requête en lecture qui a provoqué le défaut de cache.

Lors d'une opération 114, à chaque fois qu'une nouvelle ligne L_{i,j} est enregistrée dans la mémoire cache 6 :
- la valeur du compteur C_{i,j} associée à cette ligne est prise égale à la valeur actuelle du compteur 50, et
- la valeur de l'identifiant Idᵤ contenue dans la requête en lecture est associée à cette ligne L_{i,j}. Ici, cette valeur de l'identifiant Idᵤ est enregistrée dans la colonne Idᵤ du support 7.

Enfin, lors d'une opération 116, le mot identifié par la requête reçue est lu et envoyé au microprocesseur 4.

L'étape 82 débute par une opération 128 de transmission, à la mémoire 6, d'une requête de lecture. Par la suite, cette étape 128 est décrite dans le cas particulier de la lecture d'un mot par le processus u. Toutefois, tout ce qui est décrit dans ce cas particulier s'applique à tout autre processus exécuté par le microprocesseur 4 et qui souhaite lire un mot dans une page partagée en lecture seule de la mémoire 6.

Pour cela, au cours de l'exécution du processus u par le microprocesseur 4, une instruction de lecture d'un mot est chargée dans la file 32 d'instructions à exécuter. A ce stade, l'instruction de lecture comporte une opérande qui contient l'adresse virtuelle @rᵥ du mot à lire. Lors de l'exécution de cette instruction, l'adresse virtuelle @rᵥ est transformée en une adresse physique @rᵣ par l'unité 34. Pour cela, l'unité 34 remplace le champ Pᵥ contenu dans l'adresse @rᵥ par le contenu du champ Pᵣ de page physique. Par la suite, les valeurs de l'identifiant Idᵤ, des champs Pᵥ et Pᵣ de cette page, du paramètre q et du bit bp associés les unes aux autres par la même ligne de la table 36, sont notées, respectivement, Id₁, P₁ᵥ, P₁ᵣ, q₁ et bp₁. A cet effet, l'unité 34 sélectionne dans la table 36 la ligne qui contient la valeur Id₁ dans la colonne Idᵤ et la valeur P₁ᵥ dans la colonne Pᵥ. La valeur P₁ᵣ associée à la valeur P₁ᵥ est alors celle contenue dans la colonne Pᵣ de la ligne ainsi sélectionnée. La valeur q₁ du paramètre q et la valeur bp₁ du bit bp associée à la valeur P₁ᵥ sont également obtenue à partir de cette ligne sélectionnée. Dans ce mode de réalisation, le décalage Oᵣ est maintenu inchangé. Le microprocesseur 4 transmet alors une requête en lecture à la mémoire 6 contenant les valeurs Id₁, q₁, bp₁ et l'adresses @rᵣ. L'adresse @rᵣ contient l'étiquette Tᵣ, l'adresse @_{Si,r} et l'indice dᵣ.

Lors d'une opération 130, la mémoire 6 reçoit cette requête en lecture d'un mot.

Lors d'une opération 132, les valeurs Id₁, q₁ et bp₁ sont enregistrées dans les registres, respectivement, Idᵤ, q et bp de l'unité 14. L'étiquette Tᵣ, l'adresse @_{Si,r} et l'indice dᵣ sont également enregistrés dans les registres, respectivement, Tᵣ, @_{Si,r} et dᵣ de l'unité 14.

Lors d'une opération 134, la fonction 40 transforme alors l'adresse @_{Si,r} en une adresse @_{Si,t}. Lors de l'exécution de l'opération 134, c'est la valeur q₁ actuellement enregistrée dans le registre q qui est sélectionnée et utilisée pour paramétrer la fonction 40. L'adresse @_{Si,t} dépend donc à la fois de l'adresse @_{Si,r} reçue et de la valeur actuellement enregistrée dans le registre q.

Ensuite, lors d'une opération 136, l'unité 14 sélectionne dans le support 7, l'ensemble Sᵢ de W lignes L_{i,j} situé à l'adresse @_{Si,t}.

Lors d'une opération 138, le comparateur 56 traite les unes après les autres les W lignes sélectionnées. Pour chacune des lignes L_{i,j} ainsi sélectionnées, le comparateur 56 compare l'étiquette T_{i,j} de cette ligne à l'étiquette Tᵣ reçue et génère le signal de sélection de cette ligne uniquement si les étiquettes T_{i,j} et Tᵣ sont identiques.

En parallèle, lors d'une opération 140, pour la même ligne que celle actuellement traitée par le comparateur 56, le comparateur 52 compare la valeur du compteur G_{i,j} de cette ligne à la valeur actuelle du compteur 50. Seulement en cas de concordance entre la valeur du compteur C_{i,j} et du compteur 50, le comparateur 52 génère le signal de concordance.

Également en parallèle, lors d'une opération 142, l'extracteur 62 extrait, dans le champ D_{i,j} de la ligne actuellement traitée par le comparateur 56, le mot situé à la position repérée par l'indice dᵣ reçu.

Lors d'une opération 144, le circuit 52 transmet un signal de succès (« hit ») à l'automate 60 uniquement si, pour la même ligne L_{i,j}, le signal de sélection et le signal de concordance ont été générés, respectivement, par les comparateurs 56 et 52. Dans tous les autres cas, le circuit 54 transmet un signal de défaut de cache à l'automate 60.

En réponse à un signal de succès, lors d'une opération 146, l'automate 60 transmet au microprocesseur 4 le mot extrait lors de l'opération 142 et le procédé retourne à l'opération 128 pour traiter la prochaine requête de lecture.

Si le circuit 54 a généré un signal de défaut de cache, le procédé se poursuit par une opération 148. Lors de l'opération 148, l'automate 60 sélectionne dans la file 42 la valeur précédente du paramètre q qui y a été mémorisée, puis retourne à l'opération 134. Les opérations 134 à 144 sont alors une nouvelle fois exécutées mais cette fois-ci en utilisant la précédente valeur du paramètre q. Si le mot recherché est trouvé dans la mémoire 6 en utilisant cette précédente valeur du paramètre q, alors l'opération 146 est exécutée, ce qui arrête la réitération des opérations 134 à 144.

Dans le cas où le mot recherché est trouvé dans la mémoire 6 en utilisant une valeur précédente du paramètre q, l'opération 146 est toutefois précédée d'une opération 150. Lors de l'opération 150, l'automate 60 remplace les W lignes L_{i,j} de l'ensemble Sᵢ situé à l'adresse @_{Si,t} obtenue en utilisant la valeur reçue du paramètre q par les W lignes L_{i,j} sélectionnées en utilisant la valeur précédente du paramètre q qui a permis de trouver le mot recherché. Ainsi, si le même mot doit à nouveau être lu avant la prochaine modification de la valeur du paramètre q, l'accès à ce mot sera plus rapide car pour cela, il suffit d'utiliser la valeur reçue du paramètre q.

Lors de l'opération 150, typiquement, les W lignes L_{i,j} situées à l'adresse @_{Si,t} obtenue en utilisant la précédente valeur du paramètre q sont ensuite marquées comme étant invalides.

À l'inverse, si le mot recherché n'est pas trouvé dans la mémoire cache 6 en utilisant cette précédente valeur du paramètre q, alors l'opération 148 est une nouvelle fois exécutée. Il existe alors deux cas :
- Premier cas : Il existe dans la file 42 une valeur du paramètre q qui n'a pas encore été utilisée pour exécuter les opérations 134 à 144. Dans ce cas, ces opérations 134 à 144 sont une nouvelle fois exécutées avec cette nouvelle valeur précédente du paramètre q.
- Deuxième cas : Il n'existe plus, dans la file 42, une valeur précédente du paramètre q qui n'a pas encore été utilisée pour exécuter les opérations 134 à 144. Dans ce cas, l'automate 60 déclenche l'exécution de l'étape 80.

La figure 5 représente schématiquement l'architecture d'une mémoire cache 200 susceptible d'être utilisée à la place de la mémoire cache 6 dans le calculateur 2. La mémoire cache 200 est par exemple identique à la mémoire cache 6 sauf que l'unité 14 de gestion est remplacée par une unité 202 de gestion.

L'unité 202 est identique à l'unité 14 sauf que la file 42 est remplacée par un jeu 206 de files 42ᵤ.

Par la suite, le paramètre q associé à un processus particulier est noté qᵤ, où l'indice u est un identifiant du processus exécuté par le microprocesseur 4.

Le jeu 206 comporte autant de files 42ᵤ que de processus différents en cours d'exécution. Chaque file 42ᵤ est associée à un seul processus u. L'indice u dans la référence numérique 42ᵤ est l'identifiant du processus u associé à cette file 42u.

Chaque file 42ᵤ est ici identique à la file 42 et fonctionne comme la file 42 sauf qu'elle comporte uniquement les valeurs précédentes du paramètre qᵤ et donc seulement les valeurs précédentes du paramètre q associée à un processus u particulier.

Le fonctionnement de l'unité 202 est identique à celui de l'unité 14 sauf que lors de l'opération 148, la valeur précédente du paramètre q est seulement sélectionnée dans la file 42ᵤ associée à l'identifiant Idᵤ reçu dans la requête de lecture.

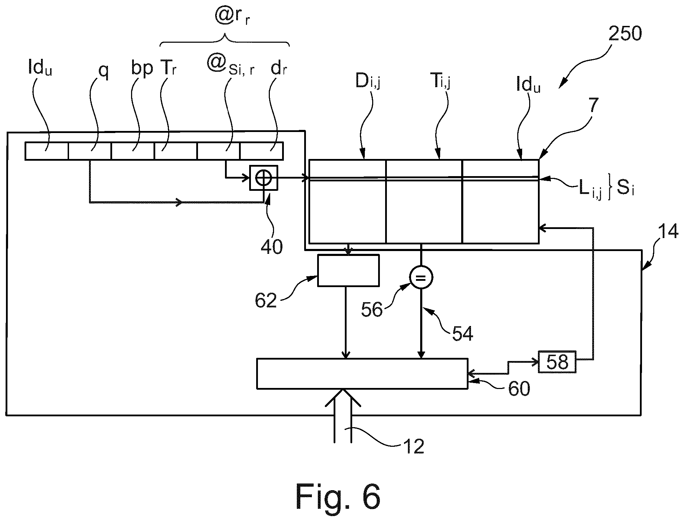

La figure 6 représente une mémoire cache 250 susceptible d'être utilisée à la place de la mémoire cache 6. La mémoire cache 250 est, par exemple, identique à la mémoire cache 6 sauf que :
- la file 42, le compteur 50, le comparateur 52 et le circuit 54 sont omis, et
- le champ C_{i,j} des lignes L_{i,j} est omis.

Dans ce mode de réalisation, les valeurs précédentes du paramètre q ne sont donc pas enregistrées. De même, le compteur de modification des valeurs du paramètre q n'est pas mis en œuvre. Ainsi, dans ce mode de réalisation, on ne cherche pas à remédier au premier et au second effets secondaires précédemment décrits. Ceci est notamment acceptable si le premier effet secondaire est considéré comme acceptable et si la probabilité que le second effet secondaire se produise est considérée comme étant négligeable. En contrepartie, l'architecture et le fonctionnement de la mémoire 250 sont plus simples que dans les précédents modes de réalisation.

Le fonctionnement de la mémoire 250 est identique à celui de la mémoire 6 sauf que :
- les opérations 140, 148 et 150 sont omises,
- l'étape 100 est omise, et
- lors de l'opération 144, le comparateur 56 transmet directement un signal de succès (« hit ») à l'automate 60 dès que l'étiquette Tᵣ reçue correspond à l'étiquette T_{i,j} de la ligne L_{i,j} traitée et, en alternance, transmet un signal de défaut de cache si l'étiquette Tᵣ reçue n'a pas pu être trouvée dans les W lignes L_{i,j} sélectionnées à l'aide de l'adresse @_{Si,t}.

### Chapitre II : Variantes :

Toutes les variantes décrites dans le contexte de l'unité 14, peuvent être transposées et appliquées à l'unité 200 et vice-versa. De même, la plupart des variantes décrites dans le contexte de l'unité 14 sont transposables à l'unité 250. Ainsi, par la suite, les différentes variantes sont principalement décrites seulement dans le contexte de l'unité 14 de gestion.

### Variantes concernant le paramètre q :

Dans un mode de réalisation simplifié, la même valeur du paramètre q est associée à tous les numéros de page utilisés par le même processus. Dans ce cas, la valeur du paramètre q varie en fonction de l'identifiant Idᵤ du processus u mais ne varie pas en fonction du numéro de page accédée. Dès lors dès que la valeur du paramètre q est modifiée pour un processus, cette valeur du paramètre q est modifiée pour toutes les pages partagées en lecture seule associées à ce processus.

D'autres méthodes de sélection des précédentes valeurs du paramètre q sont possibles. En particulier, les différentes valeurs du paramètre q enregistrées dans la file 42 ne sont pas nécessairement sélectionnées dans l'ordre en partant de la valeur la plus récente vers la valeur la plus ancienne. Par exemple, dans un mode de réalisation alternatif, à chaque fois qu'une valeur précédente du paramètre q doit être sélectionnée, celle-ci est sélectionnée par tirage aléatoire parmi les R valeurs précédentes enregistrées dans la file 42. Si après un nombre Rmax prédéterminé de tirages aléatoires, le mot recherché n'a pas été trouvé, alors un défaut de cache est déclenché. Dans un autre mode de réalisation possible, toutes les valeurs du paramètre q sont systématiquement sélectionnées les unes après les autres. Dès lors, même après avoir sélectionné une valeur du paramètre q qui permet de trouver dans la mémoire cache 6 le mot recherché, le procédé ne s'arrête pas et les valeurs suivantes du paramètre q sont quand même sélectionnées les unes après les autres. Ainsi, le temps de recherche d'un mot dans la mémoire cache est systématiquement constant. Grâce à cela, il n'est pas possible d'obtenir une information sur la position de la précédente valeur du paramètre q utilisée pour trouver le mot recherché. Ce mode de réalisation est donc plus robuste vis-à-vis des attaques par canaux auxiliaires.

Il existe d'autres méthodes qu'un tirage aléatoire ou pseudo-aléatoire pour générer une nouvelle valeur du paramètre q. Par exemple, les valeurs de l'ensemble E_{q} sont classées dans un ordre prédéterminé depuis une première valeur jusqu'à une dernière valeur. La nouvelle valeur du paramètre q est prise égale à la valeur qui suit immédiatement la précédente valeur de ce paramètre dans l'ordre prédéterminé. Lorsque la valeur précédente du paramètre q est égale à la dernière valeur de l'ensemble E_{q}, la nouvelle valeur du paramètre q est prise égale à la première valeur de cet ensemble E_{q}. Ainsi, la valeur du paramètre q varie de façon cyclique. Dans une autre variante, la nouvelle valeur du paramètre q est construite à partir de sa précédente valeur. Par exemple, la nouvelle valeur est construite à l'aide de la relation suivante : q_{new} = q_{old}.kₑ mod p, où :
- q_{new} et q_{old} sont, respectivement, la nouvelle et l'ancienne valeurs du paramètre q,
- kₑ est un nombre entier constant codé sur p bits, et
- q_{old}.kₑ mod p est l'opération de multiplication modulaire de la valeur q_{old} par le nombre kₑ modulo p.

Dans les modes de réalisation précédents, la relation qui associe la valeur du paramètre q à un numéro de page et à un processus a été décrite dans le cas particulier où elle est enregistrée dans la table 36 de pages. Toutefois, cette relation peut être enregistrée ailleurs. Par exemple, elle peut être enregistrée dans une nouvelle table, indépendante de la table 36, qui comporte les colonnes Idᵤ, Pᵣ, q et bp mais dépourvue de la colonne Pᵥ. Cette nouvelle table n'est donc pas une table de pages. Cette nouvelle table peut être enregistrée dans une mémoire de l'unité 14. Dans ce cas, l'unité 14 comporte aussi de préférence le générateur 38 et l'automate 60 est configuré pour :
- réaliser l'opération 94 à la place du microprocesseur 4, et
- sélectionner la valeur du paramètre q, associée par cette nouvelle table, à l'identifiant Idᵤ reçu dans une requête de lecture.
Dans ce dernier mode de réalisation, la valeur du paramètre q n'est pas transmise du microprocesseur 4 à la mémoire 6. Par contre, la requête de lecture comporte toujours l'identifiant Idᵤ.

Il existe de nombreux types différents de tables de pages. Ce qui a été décrit peut être adapté à ces différents types de tables de pages. En particulier, ce qui a été décrit ici peut être mis en œuvre avec une table de pages multi-niveaux ("Mutilevel page table" en anglais), une table de pages virtualisée ("Virtualized page table" en anglais) et une table de pages imbriquée ("Nested page tables" en anglais).

### Variantes concernant la fonction de transformation :

D'autres modes de réalisation de la fonction de transformation sont possibles. Par exemple, l'opération XOR est remplacée par une opération plus complexe comme une opération de chiffrement mettant en œuvre un algorithme de chiffrement complexe comme l'algorithme de chiffrement AES (Advanced Encryption Standard). Dans ce dernier cas, la valeur du paramètre q reçue est utilisée comme clé de chiffrement pour obtenir l'adresse d'ensemble @_{Si,t} à partir de l'adresse @_{Si,r}. Dans ce cas, l'adresse @_{Si,t} est le cryptogramme de l'adresse @_{Si,r}.

Dans un autre mode de réalisation, l'unité 14 comporte plusieurs matrices de permutations différentes pré-enregistrées dans une mémoire. L'adresse @_{Si,t} est alors obtenue en multipliant l'adresse @_{Si,r} par l'une de ces matrices. La matrice à utiliser pour obtenir l'adresse @_{Si,t} est sélectionnée en fonction de la valeur du paramètre q reçue.

En variante, l'ensemble E_{q} comporte uniquement 2^{p} valeurs différentes, où l'exposant p est un nombre entier strictement inférieur à n. Dans ce cas, la fonction 40 doit être adaptée pour tenir compte du fait que le paramètre q est codé sur p bits et non pas sur n bits. Par exemple, une première solution consiste à combiner seulement p bits de l'adresse @_{Si,r} avec le paramètre q. Une autre solution consiste à générer un mot de n bits à partir du paramètre q codé sur p bits puis à combiner ce mot de n bits avec l'adresse @_{Si,r} pour obtenir l'adresse @_{Si,t}. Dans une autre variante, le nombre p est supérieur au nombre n.

Dans un autre mode de réalisation, la transformation de l'adresse @_{Si,r} est aussi mise en œuvre pour les pages non-partagées. Dans ce cas, de préférence, la valeur du paramètre q associée aux pages non-partagées est modifiée de façon spontanée et répétée au cours de l'exécution d'un processus. Par "modification spontanée" de la valeur du paramètre q, on désigne une modification de la valeur du paramètre q qui est déclenchée même en absence de détection d'un usage anormal de la mémoire cache. Par exemple, la génération d'une nouvelle valeur du paramètre q pour une page non-partagée est déclenchée dès qu'un compteur de nombres d'accès à la mémoire cache dépasse une limite Lmax₄₆. Généralement, la limite Lmax₄₆ est supérieure à 50 ou 100 et inférieure à 50 000 ou 20 000. Ici, la limite Lmax₄₆ est comprise entre 100 et 20 000 et, de préférence, entre 100 et 5 000 ou entre 100 et 1 000. À chaque fois que la limite Lmax₄₆ est atteinte, le générateur 38 réinitialise le compteur d'accès à zéro. Le déclenchement de la génération d'une nouvelle valeur du paramètre q pour une page non-partagée peut aussi être réalisée périodiquement. Par exemple, le microprocesseur 4 comporte une minuterie qui décompte une durée T44. À chaque fois que la durée T44 s'est écoulée, le générateur 38 génère une nouvelle valeur du paramètre q pour la page non-partagée puis recommence à décompter la durée T44. La génération d'une nouvelle valeur du paramètre q pour une page non-partagée peut aussi être déclenchée à chaque changement de contexte. Par "changement de contexte", on désigne le fait que le microprocesseur 4 arrête d'exécuter les instructions d'un premier processus pour reprendre ou débuter l'exécution d'un second processus.

La modification spontanée de la valeur du paramètre q associée à une page non-partagée peut aussi être mise en œuvre pour une page partagée en lecture seule. Dans ce cas, la modification d'une valeur du paramètre q associée à cette page partagée en lecture seule est non seulement déclenchée en cas de détection d'un usage anormal de la mémoire cache mais aussi de façon spontanée et répétée. En cas de modification spontanée, la nouvelle valeur du paramètre q pour cette page est la même pour tous les processus qui partagent cette page. Ainsi, les modifications spontanées de la valeur du paramètre q associée à une page n'empêchent pas de partager efficacement cette page entre les différents processus.

Dans un autre mode de réalisation, l'unité 14 est modifiée pour permuter en plus les valeurs de l'indice dᵣ reçues de manière à obtenir un indice d_{r,t} transformé. Ensuite, c'est cet indice d_{r,t} qui et utilisé pour sélectionner le mot à lire. Autrement dit, ce qui a été décrit pour transformer l'adresse @_{Si,r} reçue peut aussi être appliqué en plus à l'indice dᵣ. L'homme du métier peut transposer sans difficulté l'enseignement donné ici dans le cas de l'adresse @_{Si,r} à l'indice dᵣ pour obtenir un tel mode de réalisation.

### Variantes concernant le détecteur 58 :

D'autres modes de réalisation du détecteur 58 sont possibles. Par exemple, dans un mode de réalisation simplifié, le détecteur 58 est uniquement capable de détecter un seul ou deux des usages anormaux choisis dans le groupe composé des usages anormaux 1), 2) et 3). Dans d'autres modes de réalisation, le détecteur 58 est agencé pour détecter, en plus ou à la place, d'autres usages anormaux de la mémoire 6 que les usages anormaux 1), 2) ou 3).

D'autres algorithmes sont possibles pour mettre à jour les valeurs des indicateurs I₁ᵤ, I_{2u,i} et I_{3u,i}. Par exemple, la valeur de l'indicateur I_{3u,i} est incrémentée d'un pas strictement supérieur à 1 à chaque fois que le processus u accède à l'ensemble Sᵢ.

La valeur de l'indicateur I₁ᵤ peut être représentative de la fréquence d'exécution par le processus u de l'instruction d'éviction explicite. Dans ce cas, la valeur de l'indicateur I₁ᵤ est mise à jour de façon similaire à ce qui a été décrit pour l'indicateur I_{3u,i} sauf que c'est l'exécution de l'instruction d'éviction explicite par le processus u qui déclenche l'incrément de la valeur du compteur I₁ᵤ alors que l'exécution d'une autre instruction par ce même processus décrémente la valeur de l'indicateur I₁ᵤ.

En variante, l'indicateur I₁ᵤ est remplacé par un indicateur I_{1u,a}, où l'indice a est un identifiant d'un groupe A d'un ou plusieurs ensembles Sᵢ. Il existe donc autant d'indicateurs I_{1u,a} que de groupes A. La valeur de l'indicateur I_{1u,a} est mise à jour comme décrit pour l'indicateur I₁ᵤ sauf que sa valeur est mise à jour que si l'instruction d'éviction explicite touche une ligne L_{i,j} du groupe A auquel il est associé.

Les indicateurs I_{2u,i} et I_{3u,i} peuvent être associés à un groupe de plusieurs ensembles Sᵢ plutôt qu'à un seul ensemble Sᵢ. Dans ce cas, les indicateurs I_{2u,i} et I_{3u,i} sont remplacés par, respectivement, des indicateurs I_{2u,g} et I_{3u,g}, où l'indice g est un identifiant d'un groupe Gg de plusieurs ensembles Sᵢ. La mise à jour des valeurs des indicateurs I_{2u,g} et I_{3u,g} est alors identiques à ce qui a été décrit, respectivement, pour les indicateurs I_{2u,i} et I_{3u,i} sauf qu'ils sont mis à jour à chaque accès à une ligne L_{i,j} d'un ensemble Sᵢ appartenant au groupe Gg et en prenant en compte toutes les lignes L_{i,j} de tous les ensembles Sᵢ appartenant à ce groupe Gg. Par exemple, dans un cas particulier, le groupe Gg comporte tous les ensembles Sᵢ d'une même page physique.

Dans un autre mode de réalisation, seuls certains processus sont surveillés et pas d'autre. Dans ce cas, les indicateurs I₁ᵤ, I_{2u,i} et I_{3u,i} sont construits et mis à jour uniquement pour les processus surveillés et pas pour les autres. Par exemple, l'indicateur I₁ᵤ n'est pas mis à jour lorsque le processus exécuté correspond à un processus du système d'exploitation exécuté par le microprocesseur 4.

Selon l'ensemble Sᵢ accédé, la valeur du seuil S3 n'est pas nécessairement la même que celle utilisée pour d'autres ensembles Sᵢ.

En variantes, la construction et la mise à jour d'un ou plusieurs des indicateurs I₁ᵤ, I_{2u,i} et I_{3u,i} sont réalisées par le microprocesseur 4 et non pas par l'unité 14. Par exemple, il peut être plus simple que ce soit le microprocesseur 4 et, plus précisément, le système d'exploitation exécuté par ce microprocesseur 4, qui se charge d'exécuter les opérations 88 et 90 pour l'indicateur I₁ᵤ au lieu que ce soit l'unité 14.

En variantes, lorsque le détecteur 58 détecte que l'usage anormal de la mémoire cache par un processus u a cessé, alors il modifie la valeur du paramètre q associée à cette page et à ce processus u pour que, de nouveau, tous les processus qui partagent cette page soient associés à la même valeur du paramètre q. Par exemple, le détecteur 58 détecte qu'un usage anormal a cessé dès que tous les valeurs de tous les indicateurs I₁ᵤ, I_{2u,i} et I_{3u,i} sont retombées en dessous des seuils S1, S2 et S3.

### Autres variantes :

En variante, le nombre M est supérieur au nombre R ou strictement inférieur au nombre R. Dans un cas particulier, le nombre M peut être choisi égal à zéro.

La mémoire de masse peut être située à l'extérieur du calculateur et raccordée à ce calculateur par un bus ou un réseau de transmission d'informations. De même, la mémoire principale peut elle aussi être mécaniquement située à l'extérieur du calculateur et raccordée à ce calculateur par un bus ou un réseau de transmission d'informations.

Ce qui a été décrit ici s'applique à d'autres longueurs de mot et de lignes.

On notera aussi que l'enseignement donné ici s'applique aussi aux cas des mémoires caches à correspondance directe (« direct mapped » en anglais). Dans ce cas, le nombre W est égal à un et l'adresse @_{Si,r} correspond à une seule ligne de la mémoire cache. Dans cette situation, l'indicateur I_{2u,i} n'est pas utilisé et, par exemple, l'indicateur I_{2u,g} précédemment introduit est alors utilisé à sa place.

Dans un autre mode de réalisation, l'indice dᵣ est omis dans la requête de lecture d'un mot dans la mémoire cache. Dans ce cas, en cas de correspondance entre l'étiquette Tᵣ et l'une des étiquettes T_{i,j}, la mémoire cache 6 envoie au microprocesseur 4 le champ D_{i,j} complet. C'est ensuite le microprocesseur 4 qui procède lui-même à l'extraction du mot souhaité dans le champ D_{i,j} reçu.

Au lieu de comporter un seul microprocesseur, le calculateur électronique peut comporter plusieurs microprocesseurs chacun capable d'accéder à la mémoire cache 6. Dans ce cas, chaque processus exécuté en parallèle des autres est, par exemple, exécuté par son propre microprocesseur. Ce qui a été décrit ici dans le cas particulier où les différents processus sont exécutés, en parallèle, par le même microprocesseur 4 fonctionne de la même façon dans le cas d'un tel calculateur électronique équipé de plusieurs microprocesseurs.

Ce qui a été décrit ici s'applique aussi dans un contexte où un mécanisme de mémoire virtuelle paginée n'est pas mis en œuvre. Dans ce cas, si la mémoire n'est pas paginée, les colonnes Pᵥ et Pᵣ peuvent être omises dans la table 36. La table 36 n'est alors plus une table de pages.

Le compteur 50 a été décrit dans le cas particulier où il est commun à tous les processus. En variante, le compteur 50 est remplacé par un ensemble de compteurs contenant un compteur 50u pour chaque processus u en cours d'exécution. Le fonctionnement de chaque compteur 50u est identique au fonctionnement du compteur 50 sauf que le compteur 50u compte uniquement les modifications de la valeur du paramètre q associée au processus u. Le fonctionnement de ce mode de réalisation est par exemple identique à celui décrit en référence au procédé de la figure 4 sauf que c'est le compteur 50u associé au processus u qui est utilisé à la place du compteur 50.

### Variantes du procédé :

En variante, en même temps que la valeur du paramètre q associée à un processus u est modifiée suite à la détection d'un usage anormal, la valeur du paramètre q associée aux autres processus qui partagent cette page avec le processus u est également modifiée. Ainsi, la valeur du paramètre q associée à ces autres processus est différente de sa précédente valeur après cette modification. Dans ce cas, en cas de détection d'un usage anormal de la mémoire cache par le processus u, les valeurs des paramètres q associées à tous les processus qui partage en lecture seule cette page sont modifiées.

Dans une autre variante, lorsqu'un usage anormal de la mémoire cache par le processus u est détecté, seule la valeur du paramètre q associée aux autres processus qui partagent cette page avec le processus u, est modifiée. Dans ce cas, la valeur du paramètre q associée au processus u reste, par exemple, inchangée même après la détection d'un usage anormal. Ainsi, suite à cette modification, les valeurs des paramètres q associées au processus u et aux autres processus qui partagent cette page avec ce processus u sont différentes de sorte que les accès par ces différents processus à cette page sont cloisonnés.

Lorsqu'un usage anormal de la mémoire cache par un processus u est détecté, les valeurs du paramètre q associées, dans la table 36, à toutes les pages partagées avec ce processus u sont modifiées. Ainsi, dans cette variante, ce n'est pas seulement la valeur du paramètre q associée à la page partagée sur laquelle un usage anormal a été détecté qui est modifiée.

Dans une variante possible du procédé, la ligne trouvée dans la mémoire cache en utilisant une précédente valeur du paramètre q n'est pas déplacée dans l'ensemble situé à l'adresse @_{Si,t} obtenue avec la valeur la plus récemment reçue du paramètre q. Autrement dit, l'opération 150 est omise.

L'ordre des opérations du procédé de la figure 4 peut être modifié. Par exemple, dans une variante, l'opération 140 est exécutée uniquement si lors de l'opération 138 une correspondance a été trouvée entre l'étiquette Tᵣ et l'une des étiquettes T_{i,j}. Il est aussi possible de faire l'inverse, c'est-à-dire que l'opération 138 est exécutée uniquement si lors de l'opération 140 la valeur du compteur C_{i,j} concorde avec la valeur actuelle du compteur 50.

### Chapitre III -Avantages des modes de réalisation décrits

Le fait d'utiliser la même fonction 40 pour un premier et un second processus permet d'éviter que les mots partagés en lecture seule entre ces deux processus soient dupliqués dans la mémoire cache. En effet, tant que la même valeur du paramètre q est utilisée par ce premier et ce second processus, chaque processus peut lire le même mot à la même adresse physique dans la mémoire cache. Il n'est donc pas nécessaire de le dupliquer, ce qui optimise l'usage de la mémoire cache. Par contre, le second processus peut obtenir des informations sur les adresses lues par le premier processus dans cette page. Ceci peut être exploité, si le second processus est un processus malveillant, pour obtenir des informations sensibles sur le fonctionnement de ce premier processus.

A l'inverse, le fait d'utiliser une première valeur du paramètre q pour le premier processus et une seconde valeur différente de ce paramètre q pour le second processus, permet de cloisonner les accès de ces processus à la mémoire cache. Il devient alors très difficile pour le second processus de savoir quelles sont les adresses physiques de la mémoire cache accédées par le premier processus. Ce cloisonnement permet donc d'augmenter la robustesse du procédé vis-à-vis des attaques par canaux auxiliaires de la mémoire cache. Cela a également pour conséquence que si le même mot doit être partagé en lecture seule entre les premiers et seconds processus, ce mot sera alors enregistré à deux endroits différents dans la mémoire cache, ce qui diminue l'efficacité de l'usage de cette mémoire.

Le fait de basculer automatiquement, lorsqu'un usage anormal de la mémoire cache est détecté, d'un mode où les mots peuvent être partagés vers un mode où la mémoire cache est cloisonnée permet d'améliorer à la fois la sécurité et l'efficacité de l'usage de la mémoire cache. En effet, tant qu'aucun usage anormal de la mémoire cache n'est détecté, l'usage de la mémoire cache est optimisé puisque le partage de mots par l'intermédiaire de cette mémoire cache entre différents processus est autorisé et mis en œuvre. Le cloisonnement de la mémoire cache entre différents processus est uniquement mis en œuvre lorsque c'est nécessaire, c'est-à-dire lorsqu'un usage anormal de la mémoire cache par l'un des processus a été détecté. Ainsi, on ne dégrade pas systématiquement l'usage de la mémoire cache.

Le fait d'associer différentes valeurs du paramètre q à différents numéros de page provoque un changement de la fonction de transformation à chaque changement de page. Cela renforce la sécurité du procédé.

L'usage de l'indicateur I_{2u,i} permet de détecter l'usage anormal de la mémoire cache connue sous l'expression de « *surcharge spatiale d'un* ensemble » *ou "technique Prime+Probe" en anglais.* Une telle surcharge spatiale d'un ensemble est observée dans de nombreuses attaques par canaux auxiliaires de la mémoire cache. Ainsi, l'usage de l'indicateur I_{2u,i} améliore la sécurité du procédé.

L'usage de l'indicateur I_{3u,i} permet de détecter un usage anormal de la mémoire cache connue sous l'expression de « *surcharge temporelle d'un ensemble* ». Une telle surcharge temporelle d'un ensemble est observée dans de nombreuses attaques par canaux auxiliaires de la mémoire cache. Ainsi, l'usage de l'indicateur I_{3u,i} améliore la sécurité du procédé.

Normalement, un processus ne doit pas exécuter fréquemment des instructions d'éviction explicite. L'exécution fréquente de cette instruction d'éviction explicite se rencontre surtout lorsqu'un processus malveillant met en œuvre une attaque par canaux auxiliaires de la mémoire cache. Ainsi, l'usage de l'indicateur I₁ᵤ permet également d'accroître la sécurité du procédé.

Le fait d'utiliser des fonctions de transformation qui permutent simultanément au moins 50 % des adresses @_{Si,r} augmente la difficulté pour mettre en œuvre une attaque de cette mémoire cache par canaux auxiliaires. En effet, les adressages de la mémoire cache avant et après la modification de la valeur du paramètre q sont très différents. Il est alors très difficile d'obtenir des informations sur le fonctionnement d'un processus en observant ses accès à la mémoire cache ou en mesurant les temps d'accès à la mémoire cache lorsque la modification de l'adressage intervient au cours de l'exécution de ce processus. De plus, la modification de l'adressage concerne aussi bien le cas des « hit » que le cas des « miss ». Ainsi, par rapport au procédé décrit dans l'article de Zhenghong & AI, les procédés décrits ici augmentent de façon beaucoup plus importante la diversité des accès à la mémoire cache. Les procédés décrits ici sont donc plus robuste vis-à-vis des attaques par canaux auxiliaires.

Le fait de modifier en plus spontanément la valeur du paramètre q augmente encore plus la robustesse du procédé vis-à-vis des attaques de la mémoire cache par canaux auxiliaires.

L'utilisation du compteur 50 et des compteurs de lignes C_{i,j} permet de minorer le second effet secondaire précédemment décrit sans pour autant ralentir de façon conséquente l'exécution des processus. On notera à ce sujet que pour lutter contre un tel effet secondaire, l'article de Zhenghong & AI enseigne de rendre invalide les lignes dont l'adressage a changé. Toutefois, cette méthode n'est pas transposable à la situation décrite ici où la majorité des adresses @_{Si,r} sont permutées en même temps à chaque modification de la valeur du paramètre q. En effet, invalider les lignes de chacun des ensembles S_{i,r} dont les adresses ont été permutées reviendrait à évincer de la mémoire cache un très grand nombre de lignes à chaque fois que la valeur du paramètre q est modifiée. Or, évincer un grand nombre de lignes de la mémoire cache vers une mémoire de rang supérieur ralentit de façon importante l'exécution des processus. De même, ce même article indique qu'une autre méthode, moins efficace, consiste à déplacer les lignes dans la mémoire cache pour éviter l'apparition de lignes obsolètes. Toutefois, cette autre méthode suggérée par l'article de Zhenghong & AI n'est pas non plus applicable à la présente situation où la majorité des adresses @_{Si,r} sont permutées en même temps. En effet, dans ce cas, il faudrait déplacer un très grand nombre de lignes dans la mémoire cache, ce qui ralentit également beaucoup l'exécution des processus.

L'utilisation des valeurs précédentes du paramètre q pour rechercher un mot dans la mémoire cache permet de limiter de façon substantielle le nombre de défauts de cache suite à une modification de la valeur du paramètre q. Cela minimise donc le premier effet secondaire décrit précédemment.

Le fait d'enregistrer une ligne trouvée dans la mémoire cache en utilisant une précédente valeur du paramètre q à l'emplacement correspondant à l'adresse @_{Si,t} obtenue en utilisant la valeur la plus récemment reçue du paramètre q permet de retrouver plus rapidement cette ligne si celle-ci est à nouveau lue avant la prochaine modification de la valeur du paramètre q.

## Revendications

1. Procédé de gestion d'une mémoire cache d'un calculateur électronique, ce procédé comportant l'exécution des étapes suivantes à chaque fois qu'un premier et un second processus, exécutés par le calculateur électronique, souhaitent lire un mot partagé en lecture seule dans la mémoire cache :
a) la réception (130) d'une requête contenant une adresse du mot à lire, cette adresse comprenant :
- une étiquette de lignes,
- une adresse d'ensemble, cette adresse d'ensemble appartenant à un premier ensemble de s valeurs différentes, où le nombre s est un nombre entier supérieur à deux,
b) la sélection (134), en fonction d'un identifiant du processus, d'une valeur d'un paramètre q, chaque valeur du paramètre q identifiant une fonction respective de transformation bijective qui permute au moins 50 % des valeurs du premier ensemble, cette sélection étant réalisée en utilisant des relations préenregistrées qui associent une valeur du paramètre q à chaque identifiant d'un processus, puis
c) la transformation (134) de l'adresse d'ensemble reçue en une adresse d'ensemble transformée à l'aide de la fonction de transformation identifiée par la valeur sélectionnée du paramètre q, puis
d) la sélection (136) d'une ou plusieurs étiquettes de lignes enregistrées dans la mémoire cache à l'adresse d'ensemble transformée, puis
e) la comparaison (138) de l'étiquette de lignes reçue à la ou aux étiquettes de lignes sélectionnées en fonction de l'adresse d'ensemble transformée, pour déterminer si l'une de ces étiquettes de lignes sélectionnées correspond à l'étiquette de lignes reçue,
f) lorsque aucune des étiquettes sélectionnées ne correspond à l'étiquette de lignes reçue, le déclenchement (148) d'un défaut de cache et la fourniture du mot à partir d'une mémoire de rang supérieur, et lorsque, au contraire, l'une des étiquettes de lignes sélectionnées correspond à l'étiquette de lignes reçue, la lecture (146) dans la mémoire cache du mot à l'intérieur de la ligne associée à l'étiquette de lignes qui correspond à l'étiquette de lignes reçue,
au moins lors de la première exécution des étapes a) à f) pour le premier et le second processus, les relations préenregistrées associent les identifiants des premier et second processus à une même valeur du paramètre q de sorte que lorsque l'adresse du mot à lire reçue est la même pour les premier et second processus, alors les adresses d'ensemble transformées utilisées pour lire ce mot sont les mêmes, **caractérisé en ce que** le procédé comporte en plus :
- lorsque le second processus modifie l'état de la mémoire cache, la mise à jour (88) de la valeur d'au moins un indicateur associé spécifiquement à ce second processus, la valeur de cet indicateur étant représentative d'une modification particulière de l'état de la mémoire cache déclenchée par le second processus, et
- la comparaison (90) de la valeur de cet indicateur à un seuil prédéterminé et, lorsque ce seuil prédéterminé est dépassé, la détection (92) d'un usage anormal de la mémoire cache par le second processus et, lorsque la valeur de l'indicateur ne franchit pas le seuil prédéterminé, l'absence de détection d'un usage anormal,
- en réponse à la détection d'un usage anormal de la mémoire cache par le second processus, la modification (94) des relations préenregistrées pour associer à l'identifiant du second processus une valeur du paramètre q différente de la valeur du paramètre q associée au premier processus de sorte que, après cette modification, lorsque l'adresse du mot à lire reçue est la même pour les premier et second processus, alors les adresses d'ensemble transformées utilisées pour lire ce mot sont différentes, et
- en absence de détection d'un usage anormal, les relations préenregistrées sont laissées inchangées.

2. Procédé selon la revendication 1, dans lequel :
- les relations prédéterminées associent, à chaque identifiant d'un processus, plusieurs numéros de pages de mémoire virtuelle, et chaque numéro d'une page de mémoire virtuelle est associé à sa propre valeur du paramètre q, cette valeur du paramètre q associée à ce numéro de page étant différente des valeurs du paramètres q associées au même identifiant de processus et aux autres numéros de pages, et
- lors de l'étape b), la valeur du paramètre q est sélectionnée en fonction de l'identifiant du processus et du numéro de la page de la mémoire virtuelle contenant le mot à lire.

3. Procédé selon la revendication 2, dans lequel :
- les relations prédéterminées associent, à chaque numéro d'une page de mémoire virtuelle, une adresse physique de cette page, et
- le procédé comporte l'obtention (128) de l'adresse du mot à lire reçue lors de l'étape a) en remplaçant le numéro de la page de la mémoire virtuelle contenant le mot à lire par l'adresse physique associée, par les relations préenregistrées, à ce numéro de page et à l'identifiant du processus qui souhaite lire ce mot.

4. Procédé selon l'une quelconque des revendications précédentes, dans lequel la mise à jour (88) d'au moins un indicateur associé spécifiquement au second processus comporte :
- à chaque fois que le second processus provoque le chargement d'une nouvelle ligne dans un groupe prédéterminé d'un ou plusieurs ensembles de lignes partagés en lecture seule, l'association de cette nouvelle ligne à l'identifiant du second processus, puis
- la mise à jour de la valeur d'un premier indicateur en fonction du nombre de lignes de ce groupe prédéterminé qui sont associées à l'identifiant de ce second processus.

5. Procédé selon l'une quelconque des revendications 1 à 4, dans lequel la mise à jour (88) d'au moins un indicateur associé spécifiquement au second processus comporte, à chaque fois que le second processus accède à une ligne d'un groupe prédéterminé d'un ou plusieurs ensembles de lignes partagés en lecture seule, la mise à jour de la valeur d'un deuxième indicateur en fonction du nombre de fois où le second processus a accédé à ce groupe prédéterminé pendant un intervalle de temps prédéterminé.

6. Procédé selon l'une quelconque des revendications 1 à 5, dans lequel la mise à jour (88) d'au moins un indicateur associé spécifiquement au second processus comporte, à chaque fois que l'exécution du second processus déclenche l'exécution par le calculateur électronique d'une instruction d'éviction explicite d'une ligne de la mémoire cache située à une adresse spécifiée par le second processus, la mise à jour de la valeur d'un troisième indicateur en fonction du nombre de fois où l'exécution du second processus déclenche l'exécution de cette instruction d'éviction explicite.

7. Procédé selon l'une quelconque des revendications précédentes, dans lequel, après la détection d'un usage anormal, pour au moins 50 % des valeurs du premier ensemble, la fonction de transformation, identifiée par la valeur du paramètre q associée au second processus, retourne une adresse d'ensemble transformée différente de l'adresse d'ensemble transformée qui est retournée par la fonction de transformation identifiée par la valeur du paramètre q associée au premier processus.

8. Procédé selon l'une quelconque des revendications précédentes, dans lequel, indépendamment de la détection d'un usage anormal de la mémoire cache par le second processus, le procédé comporte, au cours de l'exécution du premier et du second processus, la modification répétée des relations préenregistrées en remplaçant, dans les relations prédéterminées, chaque occurrence d'une valeur donnée du paramètre q par une autre valeur du paramètre q, de sorte que, au cours de la même exécution du premier et du second processus, la fonction de transformation, mise en œuvre lors de l'étape c), associe successivement dans le temps, à une même adresse d'ensemble susceptible d'être reçue, plusieurs adresses d'ensemble transformées différentes.

9. Procédé selon l'une quelconque des revendications précédentes, dans lequel :
- un compteur de modifications est incrémenté (92) à chaque fois que la valeur du paramètre q est modifiée,
- à chaque fois qu'une nouvelle ligne est enregistrée (114) dans la mémoire cache, la valeur actuelle du compteur de modifications est enregistrée dans un compteur de lignes associé uniquement à cette ligne,
- lorsque l'une des étiquettes de lignes sélectionnée correspond à l'étiquette de lignes reçue, le procédé comporte :
• la comparaison (140) de la valeur du compteur de ligne de la ligne comportant cette étiquette de ligne, à la valeur du compteur de modification,
• lorsque la valeur du compteur de lignes est inférieure à Cₘ-M, alors la lecture du mot dans la mémoire cache est inhibée et un défaut de cache est déclenché, et
• à l'inverse, lorsque la valeur du compteur de lignes est supérieure ou égale à Cₘ-M, alors le défaut de cache n'est pas déclenché et la lecture du mot dans la mémoire cache est poursuivie,
où :
- Cₘ est la valeur du compteur de modifications au moment où la valeur du compteur de lignes est comparée à la valeur du compteur de modification, et
- M est un nombre entier compris entre 1 et 50.

10. Procédé selon la revendication 9, dans lequel le procédé comporte :
- le marquage (100) de l'ensemble des lignes de la mémoire cache comme étant invalides en réponse au franchissement par le compteur de modifications d'un seuil prédéterminé, et
- l'inhibition de l'utilisation de chaque ligne marquée comme étant invalide jusqu'à son remplacement par une nouvelle ligne chargée à partir de la mémoire de rang supérieur.

11. Procédé selon l'une quelconque des revendications précédentes, dans lequel :
- à chaque modification de la valeur du paramètre q, la précédente valeur du paramètre q est enregistrée (92) dans une file contenant les R précédentes valeurs du paramètre q, où R est un nombre entier compris entre 1 et 50,
- lorsque aucune des étiquettes de lignes sélectionnées ne correspond à l'étiquette de lignes reçue et avant de déclencher un défaut de cache et avant de fournir le mot à partir de la mémoire de rang supérieur, l'une des précédentes valeurs du paramètre q est sélectionnée (148) dans la file et les étapes b) à f) sont exécutées une nouvelle fois en utilisant la précédente valeur sélectionnée pour le paramètre q à la place de la valeur courante de ce paramètre q.

12. Procédé selon la revendication 11, dans lequel, lorsqu'une étiquette de lignes correspondant à l'étiquette de lignes reçue est trouvée dans la mémoire cache en utilisant l'une des précédentes valeurs du paramètre q, le procédé comporte le remplacement (150) de l'une des lignes de l'ensemble situé à l'adresse d'ensembles transformée obtenue à partir de la valeur reçue du paramètre q, par la ligne associée à cette étiquette de lignes correspondant à l'étiquette de lignes reçue trouvée dans la mémoire cache en utilisant l'une des précédentes valeurs du paramètre q.

13. Procédé selon la revendication 11 ou 12, dans lequel le nombre R est compris entre 4 et 16.

14. Procédé selon les revendications 9 et 11 prises ensemble, dans lequel le nombre M est égal au nombre R.

15. Unité (14; 200; 250) de gestion d'une mémoire cache d'un calculateur électronique, cette unité étant configurée pour réaliser les étapes suivantes à chaque fois qu'un premier et un second processus, exécutés par le calculateur électronique, souhaitent lire un mot partagé en lecture seule dans la mémoire cache :
a) la réception d'une requête contenant une adresse du mot à lire, cette adresse comprenant :
- une étiquette de lignes,
- une adresse d'ensemble, cette adresse d'ensemble appartenant à un premier ensemble de s valeurs différentes, où le nombre s est un nombre entier supérieur à deux,
b) l'identification d'une fonction de transformation en fonction d'une valeur d'un paramètre q sélectionnée en fonction d'un identifiant du processus, chaque valeur du paramètre q identifiant une fonction respective de transformation bijective qui permute au moins 50 % des valeurs du premier ensemble, la sélection de la valeur du paramètre q ayant préalablement été réalisée en utilisant des relations préenregistrées qui associent une valeur du paramètre q à chaque identifiant d'un processus, puis
c) la transformation de l'adresse d'ensemble reçue en une adresse d'ensemble transformée à l'aide de la fonction de transformation identifiée par la valeur du paramètre q, puis
d) la sélection d'une ou plusieurs étiquettes de lignes enregistrées dans la mémoire cache à l'adresse d'ensemble transformée, puis
e) la comparaison de l'étiquette de lignes reçue à la ou aux étiquettes de lignes sélectionnées en fonction de l'adresse d'ensemble transformée, pour déterminer si l'une de ces étiquettes de lignes sélectionnées correspond à l'étiquette de lignes reçue,
f) lorsque aucune des étiquettes sélectionnées ne correspond à l'étiquette de lignes reçue, le déclenchement d'un défaut de cache et la fourniture du mot à partir d'une mémoire de rang supérieur, et lorsque, au contraire, l'une des étiquettes de lignes sélectionnées correspond à l'étiquette de lignes reçue, la lecture dans la mémoire cache du mot à l'intérieur de la ligne associée à l'étiquette de lignes qui correspond à l'étiquette de lignes reçue,
au moins lors de la première exécution des étapes a) à f) pour le premier et le second processus, les relations préenregistrées associent les identifiants des premier et second processus à une même valeur du paramètre q de sorte que lorsque l'adresse du mot à lire reçue est la même pour les premier et second processus, alors les valeurs reçues du paramètre q sont les mêmes et les adresses d'ensemble transformées utilisées pour lire ce mot sont les mêmes,
**caractérisé en ce que** l'unité (14; 200; 250) de gestion est également configurée pour réaliser les étapes suivantes :
- lorsque le second processus modifie l'état de la mémoire cache, la mise à jour de la valeur d'au moins un indicateur associé spécifiquement à ce second processus, la valeur de cet indicateur étant représentative d'une modification particulière de l'état de la mémoire cache déclenchée par le second processus, et
- la comparaison de la valeur de cet indicateur à un seuil prédéterminé et, lorsque ce seuil prédéterminé est dépassé, la détection d'un usage anormal de la mémoire cache par le second processus et, lorsque la valeur de l'indicateur ne franchit pas le seuil prédéterminé, l'absence de détection d'un usage anormal,
- en réponse à la détection d'un usage anormal de la mémoire cache par le second processus, l'unité de gestion déclenche la modification des relations préenregistrées pour associer à l'identifiant du second processus une valeur du paramètre q différente de la valeur du paramètre q associée au premier processus de sorte que, après cette modification, lorsque l'adresse du mot à lire reçue est la même pour les premier et second processus, alors les adresses d'ensemble transformées utilisées pour lire ce mot sont différentes, et
- en absence de détection d'un usage anormal, l'unité de gestion ne déclenche pas la modification des relations préenregistrées et celles-ci sont laissées inchangées.

## Patentansprüche

1. Verfahren zur Verwaltung eines Cache-Speichers eines elektronischen Rechners, dieses Verfahren aufweisend die Ausführung der folgenden Schritte jedes Mal, wenn ein erster und ein zweiter Prozess, die vom elektronischen Rechner ausgeführt werden, ein Wort im Cache-Speicher lesen möchten, das nur lesend gemeinsam genutzt wird:
a) das Empfangen (130) einer Anforderung, die eine Adresse des zu lesenden Worts enthält, diese Adresse umfassend:
- ein Zeilenetikett,
- eine Mengenadresse, wobei diese Mengenadresse zu einer ersten Menge von s verschiedenen Werten gehört, wobei die Zahl s eine Ganzzahl größer als zwei ist,
b) das Auswählen (134), in Abhängigkeit von einer Kennung des Prozesses, eines Werts eines Parameters q, wobei jeder Wert des Parameters q eine jeweilige bijektive Umwandlungsfunktion identifiziert, die mindestens 50 % der Werte der ersten Menge permutiert, wobei diese Auswahl mittels vorab gespeicherter Beziehungen durchgeführt wird, die einen Wert des Parameters q jeder Kennung eines Prozesses zuordnen, dann
c) das Umwandeln (134) der empfangenen Mengenadresse in eine umgewandelte Mengenadresse mithilfe der bijektiven Umwandlungsfunktion, die von dem ausgewählten Wert des Parameters q identifiziert wird, dann
d) das Auswählen (136) eines oder mehrerer Zeilenetiketten, die im Cache-Speicher an der umgewandelten Mengenadresse gespeichert sind, dann
e) das Vergleichen (138) des empfangenen Zeilenetiketts mit dem oder den Zeilenetiketten, die in Abhängigkeit von der umgewandelten Mengenadresse ausgewählt sind, um zu bestimmen, ob eins dieser ausgewählten Zeilenetiketten dem empfangenen Zeilenetikett entspricht,
f) wenn keins der ausgewählten Etiketten dem empfangenen Zeilenetikett entspricht, das Auslösen (148) eines Cache-Fehlers und das Bereitstellen des Worts aus einem höherrangigen Speicher, und wenn, im Gegenteil, eins der ausgewählten Zeilenetiketten dem empfangenen Zeilenetikett entspricht, das Lesen (146) des Worts im Cache-Speicher innerhalb der Zeile, die dem Zeilenetikett zugeordnet ist, das dem empfangenen Zeilenetikett entspricht,
wenigstens bei der ersten Ausführung der Schritte a) bis f) für den ersten und zweiten Prozess ordnen die vorab gespeicherten Beziehungen die Kennungen des ersten und zweiten Prozesses einem selben Wert des Parameters q zu, so dass, wenn die empfangene Adresse des zu lesenden Worts für den ersten und zweiten Prozess dieselbe ist, die umgewandelten Mengenadressen, die zum Lesen dieses Worts genutzt werden, dieselben sind, **dadurch gekennzeichnet, dass** das Verfahren außerdem Folgendes aufweist:
- wenn der zweite Prozess den Zustand des Cache-Speichers ändert, das Aktualisieren (88) des Werts mindestens eines Indikators, der speziell diesem zweiten Prozess zugeordnet ist,
wobei der Wert dieses Indikators für eine besondere Änderung des Zustands des Cache-Speichers repräsentativ ist, die vom zweiten Prozess ausgelöst wird, und
- das Vergleichen (90) des Werts dieses Indikators mit einem vorbestimmten Schwellenwert, und, wenn dieser vorbestimmte Schwellenwert überschritten wird, das Detektieren (92) einer anormalen Nutzung des Cache-Speichers durch den zweiten Prozess, und, wenn der Wert des Indikators den vorbestimmten Schwellenwert nicht überschreitet, das Nichtdetektieren einer anormalen Nutzung,
- in Reaktion auf die Detektion einer anormalen Nutzung des Cache-Speichers durch den zweiten Prozess, das Ändern (94) der vorab gespeicherten Beziehungen, um der Kennung des zweiten Prozesses einen Wert des Parameters q zuzuordnen, der vom Wert des Parameters q verschieden ist, der dem ersten Prozess zugeordnet ist, so dass nach dieser Änderung, wenn die empfangene Adresse des zu lesenden Worts für den ersten und zweiten Prozess dieselbe ist, die umgewandelten Mengenadressen, die zum Lesen dieses Worts genutzt werden, verschieden sind, und
- bei Nichtdetektion einer anormalen Nutzung werden die vorab gespeicherten Beziehungen unverändert gelassen.

2. Verfahren nach Anspruch 1, wobei:
- die vorbestimmten Beziehungen jeder Kennung eines Prozesses mehrere Seitennummern virtuellen Speichers zuordnen, und jede Nummer einer Seite virtuellen Speichers ihrem eigenen Wert des Parameters q zugeordnet wird, wobei dieser Wert des Parameters q, der dieser Seitennummer zugeordnet ist, von den Werten des Parameters q verschieden ist, die derselben Prozesskennung und den anderen Seitennummern zugeordnet sind, und
- beim Schritt b) der Wert des Parameters q in Abhängigkeit von der Kennung des Prozesses und der Nummer der Seite des virtuellen Speichers ausgewählt wird, der das zu lesende Wort enthält.

3. Verfahren nach Anspruch 2, wobei:
- die vorbestimmten Beziehungen jeder Nummer einer Seite virtuellen Speichers eine physische Adresse dieser Seite zuordnen, und
- das Verfahren das Beziehen (128) der Adresse des zu lesenden Worts aufweist, die beim Schritt a) empfangen wurde, durch Ersetzung der Nummer der Seite des virtuellen Speichers, der das zu lesende Wort enthält, durch die physische Adresse, die durch die vorab gespeicherten Beziehungen dieser Seitennummer und der Kennung des Prozesses, der dieses Wort lesen möchte, zugeordnet ist.

4. Verfahren nach einem der vorhergehenden Ansprüche, wobei das Aktualisieren (88) mindestens eines Indikators, der speziell dem zweiten Prozess zugeordnet ist, Folgendes aufweist:
- jedes Mal, wenn der zweite Prozess das Laden einer neuen Zeile in eine vorbestimmte Gruppe einer oder mehrerer Zeilenmengen bewirkt, die nur lesend gemeinsam genutzt werden, das Zuordnen dieser neuen Zeile zur Kennung des zweiten Prozesses, dann
- das Aktualisieren des Werts eines ersten Indikators in Abhängigkeit von der Anzahl von Zeilen dieser vorbestimmten Gruppe, die der Kennung dieses zweiten Prozesses zugeordnet sind.

5. Verfahren nach einem der Ansprüche 1 bis 4, wobei das Aktualisieren (88) mindestens eines Indikators, der speziell dem zweiten Prozess zugeordnet ist, jedes Mal, wenn der zweite Prozess auf eine Zeile einer vorbestimmten Gruppe einer oder mehrerer Zeilenmengen zugreift, die nur lesend gemeinsam genutzt werden, das Aktualisieren des Werts eines zweiten Indikators in Abhängigkeit davon, wie oft der zweite Prozess während eines vorbestimmten Zeitintervalls auf diese vorbestimmte Gruppe zugegriffen hat, aufweist.

6. Verfahren nach einem der Ansprüche 1 bis 5, wobei das Aktualisieren (88) mindestens eines Indikators, der speziell dem zweiten Prozess zugeordnet ist, jedes Mal, wenn die Ausführung des zweiten Prozesses die Ausführung, durch den elektronischen Rechner, einer ausdrücklichen Anweisung zur Verdrängung einer Zeile aus dem Cache-Speicher auslöst, die sich an einer Adresse befindet, die vom zweiten Prozess vorgegeben ist, das Aktualisieren des Werts eines dritten Indikators in Abhängigkeit davon aufweist, wie oft die Ausführung des zweiten Prozesses die Ausführung dieser expliziten Verdrängungsanweisung auslöst.

7. Verfahren nach einem der vorhergehenden Ansprüche, wobei nach der Detektion einer anormalen Nutzung für mindestens 50 % der Werte der ersten Menge die Umwandlungsfunktion, die vom Wert des Parameters q identifiziert wird, der dem zweiten Prozess zugeordnet ist, eine umgewandelte Mengenadresse zurückgibt, die von der umgewandelten Mengenadresse verschieden ist, die von der Umwandlungsfunktion zurückgegeben wird, die vom Wert des Parameters q identifiziert wird, der dem ersten Prozess zugeordnet ist.

8. Verfahren nach einem der vorhergehenden Ansprüche, wobei unabhängig von der Detektion einer anormalen Nutzung des Cache-Speichers durch den zweiten Prozess, das Verfahren im Verlauf der Ausführung des ersten und zweiten Prozesses das wiederholte Ändern der vorab gespeicherten Beziehungen durch Ersetzung, in den vorab gespeicherten Beziehungen, jedes Auftretens eines bestimmten Werts des Parameters q durch einen anderen Wert des Parameters q aufweist, so dass im Verlauf derselben Ausführung des ersten und zweiten Prozesses die Umwandlungsfunktion, die beim Schritt c) umgesetzt wird, mit der Zeit mehrere verschiedene umgewandelte Mengenadressen nacheinander einer selben Mengenadresse zuordnet, die empfangen werden kann.

9. Verfahren nach einem der vorhergehenden Ansprüche, wobei:
- ein Änderungszähler jedes Mal, wenn der Wert des Parameters q geändert wird, inkrementiert (92) wird,
- jedes Mal, wenn eine neue Zeile im Cache-Speicher gespeichert (114) wird, der aktuelle Wert des Änderungszählers in einem Zeilenzähler gespeichert wird, der nur dieser Zeile zugeordnet ist,
- wenn eins der ausgewählten Zeilenetiketten dem empfangenen Zeilenetikett entspricht, das Verfahren Folgendes aufweist:
• das Vergleichen (140) des Werts des Zeilenzählers der Zeile, die dieses Zeilenetikett aufweist, mit dem Wert des Änderungszählers,
• wenn der Wert des Zeilenzählers kleiner als Cₘ-M ist, wird das Lesen des Worts im Cache-Speicher gehemmt, und ein Cache-Fehler wird ausgelöst, und
• umgekehrt, wenn der Wert des Zeilenzählers größer oder gleich Cₘ-M ist, wird der Cache-Fehler nicht ausgelöst, und das Lesen des Worts im Cache-Speicher wird fortgesetzt,
wobei:
- Cₘ der Wert des Änderungszählers zu dem Zeitpunkt ist, zu dem der Wert des Zeilenzählers mit dem Wert des Änderungszählers verglichen wird, und
- M eine Ganzzahl zwischen 1 und 50 ist.

10. Verfahren nach Anspruch 9, wobei das Verfahren Folgendes aufweist:
- das Markieren (100) der Menge der Zeilen des Cache-Speichers als ungültig in Reaktion auf das Überschreiten eines vorbestimmten Schwellenwerts durch den Änderungszähler, und
- das Hemmen der Nutzung jeder als ungültig markierten Zeile bis zu ihrer Ersetzung durch eine neue Zeile, die aus dem höherrangigen Speicher geladen wird.

11. Verfahren nach einem der vorhergehenden Ansprüche, wobei:
- bei jeder Änderung des Werts des Parameters q der vorhergehende Wert des Parameters q in einer Warteschlange gespeichert (92) wird, die die R vorhergehenden Werte des Parameters q enthält, wobei R eine Ganzzahl zwischen 1 und 50 ist,
- wenn keins der ausgewählten Zeilenetiketten dem empfangenen Zeilenetikett entspricht, und vor dem Auslösen eines Cache-Fehlers und vor dem Bereitstellen des Worts aus dem höherrangigen Speicher, einer der vorhergehenden Werte des Parameters q in der Warteschlange ausgewählt (148) wird und die Schritte b) und f) erneut ausgeführt werden, wobei der ausgewählte vorhergehende Wert für den Parameter q anstelle des aktuellen Werts dieses Parameters q genutzt wird.

12. Verfahren nach Anspruch 11, wobei, wenn ein Zeilenetikett, das dem empfangenen Zeilenetikett entspricht, im Cache-Speicher gefunden wird, wobei einer der vorhergehenden Werte des Parameters q genutzt wird, das Verfahren das Ersetzen (150) einer der Zeilen der Menge, die sich an der umgewandelten Mengenadresse befindet, die ausgehend von dem empfangenen Wert des Parameters q erhalten wird, durch die Zeile aufweist, die diesem Zeilenetikett zugeordnet ist, das dem empfangenen Zeilenetikett entspricht, das im Cache-Speicher gefunden wird, wobei einer der vorhergehenden Werte des Parameters q genutzt wird.

13. Verfahren nach Anspruch 11 oder 12, wobei die Zahl R zwischen 4 und 16 liegt.

14. Verfahren nach den Ansprüchen 9 und 11 zusammengenommen, wobei die Zahl M gleich der Zahl R ist.

15. Einheit (14; 200; 250) zur Verwaltung eines Cache-Speichers eines elektronischen Rechners, wobei diese Einheit dazu ausgebildet ist, die folgenden Schritte jedes Mal durchzuführen, wenn ein erster und ein zweiter Prozess, die vom elektronischen Rechner ausgeführt werden, ein Wort im Cache-Speicher lesen möchten, das nur lesend gemeinsam genutzt wird:
a) das Empfangen einer Anforderung, die eine Adresse des zu lesenden Worts enthält, diese Adresse umfassend:
- ein Zeilenetikett,
- eine Mengenadresse, wobei diese Mengenadresse zu einer ersten Menge von s verschiedenen Werten gehört, wobei die Zahl s eine Ganzzahl größer als zwei ist,
b) das Identifizieren einer Umwandlungsfunktion in Abhängigkeit von einem Wert eines Parameters q, der in Abhängigkeit von einer Kennung des Prozesses ausgewählt wird, wobei jeder Wert des Parameters q eine jeweilige bijektive Umwandlungsfunktion identifiziert, die mindestens 50 % der Werte der ersten Menge permutiert, wobei die Auswahl des Werts des Parameters q zuvor mittels vorab gespeicherter Beziehungen durchgeführt wurde, die einen Wert des Parameters q jeder Kennung eines Prozesses zuordnen, dann
c) das Umwandeln der empfangenen Mengenadresse in eine umgewandelte Mengenadresse mithilfe der bijektiven Umwandlungsfunktion, die von dem Wert des Parameters q identifiziert wird, dann
d) das Auswählen eines oder mehrerer Zeilenetiketten, die im Cache-Speicher an der umgewandelten Mengenadresse gespeichert sind, dann
e) das Vergleichen des empfangenen Zeilenetiketts mit dem oder den Zeilenetiketten, die in Abhängigkeit von der umgewandelten Mengenadresse ausgewählt sind, um zu bestimmen, ob eins dieser ausgewählten Zeilenetiketten dem empfangenen Zeilenetikett entspricht,
f) wenn keins der ausgewählten Etiketten dem empfangenen Zeilenetikett entspricht, das Auslösen eines Cache-Fehlers und das Bereitstellen des Worts aus einem höherrangigen Speicher, und wenn, im Gegenteil, eins der ausgewählten Zeilenetiketten dem empfangenen Zeilenetikett entspricht, das Lesen des Worts im Cache-Speicher innerhalb der Zeile, die dem Zeilenetikett zugeordnet ist, das dem empfangenen Zeilenetikett entspricht,
wenigstens bei der ersten Ausführung der Schritte a) bis f) für den ersten und zweiten Prozess ordnen die vorab gespeicherten Beziehungen die Kennungen des ersten und zweiten Prozesses einem selben Wert des Parameters q zu, so dass, wenn die empfangene Adresse des zu lesenden Worts für den ersten und zweiten Prozess dieselbe ist, die empfangenen Werte des Parameters q dieselben sind und die umgewandelten Mengenadressen, die zum Lesen dieses Worts genutzt werden, dieselben sind,
**dadurch gekennzeichnet, dass** die Einheit (14; 200; 250) zur Verwaltung ebenfalls dazu ausgebildet ist, die folgenden Schritte durchzuführen:
- wenn der zweite Prozess den Zustand des Cache-Speichers ändert, das Aktualisieren des Werts mindestens eines Indikators, der speziell diesem zweiten Prozess zugeordnet ist, wobei der Wert dieses Indikators für eine besondere Änderung des Zustands des Cache-Speichers repräsentativ ist, die vom zweiten Prozess ausgelöst wird, und
- das Vergleichen des Werts dieses Indikators mit einem vorbestimmten Schwellenwert, und, wenn dieser vorbestimmte Schwellenwert überschritten wird, das Detektieren einer anormalen Nutzung des Cache-Speichers durch den zweiten Prozess, und, wenn der Wert des Indikators den vorbestimmten Schwellenwert nicht überschreitet, das Nichtdetektieren einer anormalen Nutzung,
- in Reaktion auf die Detektion einer anormalen Nutzung des Cache-Speichers durch den zweiten Prozess, löst die Verwaltungseinheit das Ändern der vorab gespeicherten Beziehungen aus, um der Kennung des zweiten Prozesses einen Wert des Parameters q zuzuordnen, der vom Wert des Parameters q verschieden ist, der dem ersten Prozess zugeordnet ist, so dass nach dieser Änderung, wenn die empfangene Adresse des zu lesenden Worts für den ersten und zweiten Prozess dieselbe ist, die umgewandelten Mengenadressen, die zum Lesen dieses Worts genutzt werden, verschieden sind, und
- bei Nichtdetektion einer anormalen Nutzung löst die Verwaltungseinheit das Ändern der vorab gespeicherten Beziehungen nicht aus, und diese werden unverändert gelassen.

## Claims

1. Method for managing a cache memory of an electronic computer, this method comprising the execution of the following steps each time that a first process and a second process, executed by the electronic computer, want to read a word shared in read-only mode in the cache memory:
a) the reception (130) of a request containing an address of the word to be read, this address comprising:
- a line label,
- a set address, this set address belonging to a first set of s different values, in which the number s is an integer number greater than two,
b) the selection (134), as a function of an identifier of the process, of a value of a parameter q, each value of the parameter q identifying a respective bijective transformation function which swaps at least 50% of the values of the first set, this selection being made by using prestored relationships which associate a value of the parameter q with each identifier of a process, then
c) the transformation (134) of the received set address into a set address transformed using the transformation function identified by the selected value of the parameter q, then
d) the selection (136) of one or more line labels stored in the cache memory at the transformed set address, then
e) the comparison (138) of the received line label to the line label or labels selected as a function of the transformed set address, to determine if one of these selected line labels corresponds to the received line label,
f) when none of the selected labels corresponds to the received line label, the triggering (148) of a cache fault and the supply of the word from a memory of higher rank, and when, on the contrary, one of the selected line labels corresponds to the received line label, the reading (146) in the cache memory of the word in the line associated with the line label which corresponds to the received line label,
at least during the first execution of steps a) to f) for the first process and the second process, the prestored relationships associate the identifiers of the first process and the second process with one and the same value of the parameter q such that, when the received address of the word to be read is the same for the first process and the second process, then the transformed set addresses used to read this word are the same,
**characterized in that** the method further comprises:
- when the second process modifies the state of the cache memory, the updating (88) of the value of at least one indicator associated specifically with this second process, the value of this indicator being representative of a particular modification of the state of the cache memory triggered by the second process, and
- the comparison (90) of the value of this indicator to a predetermined threshold and, when this predetermined threshold is exceeded, the detection (92) of an abnormal use of the cache memory by the second process and, when the value of the indicator does not cross the predetermined threshold, the absence of detection of an abnormal use,
- in response to the detection of an abnormal use of the cache memory by the second process, the modification (94) of the prestored relationships to associate, with the identifier of the second process, a value of the parameter q different from the value of the parameter q associated with the first process such that, after this modification, when the received address of the word to be read is the same for the first process and the second process, then the transformed set addresses used to read this word are different, and
- in the absence of detection of an abnormal use, the prestored relationships are left unchanged.

2. Method according to Claim 1, wherein:
- the predetermined relationships associate, with each identifier of a process, several virtual memory page numbers, and each number of a virtual memory page is associated with its own value of the parameter q, this value of the parameter q associated with this page number being different from the values of the parameter q associated with the same process identifier and with the other page numbers, and
- during step b), the value of the parameter q is selected as a function of the identifier of the process and of the number of the virtual memory page containing the word to be read.

3. Method according to Claim 2, wherein:
- the predetermined relationships associate, with each number of a virtual memory page, a physical address of this page, and
- the method comprises the obtaining (128) of the address of the word to be read received in step a) by replacing the number of the virtual memory page containing the word to be read by the physical address associated, by the prestored relationships, with this page number and with the identifier of the process which wants to read this word.

4. Method according to any one of the preceding claims, wherein the updating (88) of at least one indicator associated specifically with the second process comprises:
- each time that the second process provokes the loading of a new line into a predetermined group of one or more sets of lines shared in read-only mode, the association of this new line with the identifier of the second process, then
- the updating of the value of a first indicator as a function of the number of lines of this predetermined group which are associated with the identifier of this second process.

5. Method according to any one of Claims 1 to 4, wherein the updating (88) of at least one indicator associated specifically with the second process comprises, each time that the second process accesses a line of a predetermined group of one or more sets of lines shared in read-only mode, the updating of the value of a second indicator as a function of the number of times the second process has accessed this predetermined group during a predetermined time interval.

6. Method according to any one of Claims 1 to 5, wherein the updating (88) of at least one indicator associated specifically with the second process comprises, each time that the execution of the second process triggers the execution by the electronic computer of an explicit instruction for eviction of a line of the cache memory situated at an address specified by the second process, the updating of the value of a third indicator as a function of the number of times the execution of the second process triggers the execution of this explicit eviction instruction.

7. Method according to any one of the preceding claims, wherein, after the detection of an abnormal use, for at least 50% of the values of the first set, the transformation function, identified by the value of the parameter q associated with the second process, returns a transformed set address different from the transformed set address which is returned by the transformation function identified by the value of the parameter q associated with the first process.

8. Method according to any one of the preceding claims, wherein, independently of the detection of an abnormal use of the cache memory by the second process, the method comprises, during the execution of the first process and of the second process, the repeated modification of the prestored relationships by replacing, in the predetermined relationships, each occurrence of a given value of the parameter q by another value of the parameter q such that, during the same execution of the first process and of the second process, the transformation function, implemented during step c), associates, successively in time, with one and the same set address likely to be received, several different transformed set addresses.

9. Method according to any one of the preceding claims, wherein:
- a modification counter is incremented (92) each time that the value of the parameter q is modified,
- each time that a new line is stored (114) in the cache memory, the current value of the modification counter is stored in a line counter associated only with this line,
- when one of the selected line labels corresponds to the received line label, the method comprises:
• the comparison (140) of the value of the line counter of the line comprising this line label to the value of the modification counter,
• when the value of the line counter is less than Cₘ-M, then the reading of the word in the cache memory is inhibited and a cache fault is triggered, and
• conversely, when the value of the line counter is greater than or equal to Cₘ-M, then the cache fault is not triggered and the reading of the word in the cache memory is continued,
in which:
- Cₘ is the value of the modification counter at the moment when the value of the line counter is compared to the value of the modification counter, and
- M is an integer number between 1 and 50.

10. Method according to Claim 9, wherein the method comprises:
- the marking (100) of the set of the lines of the cache memory as being invalid in response to the crossing, by the modification counter, of a predetermined threshold, and
- the inhibiting of the use of each line marked as being invalid until it is replaced by a new line loaded from the memory of higher rank.

11. Method according to any one of the preceding claims, wherein:
- on each modification of the value of the parameter q, the preceding value of the parameter q is stored (92) in a queue containing the R preceding values of the parameter q, in which R is an integer number between 1 and 50,
- when none of the selected line labels corresponds to the received line label and before triggering a cache fault and before supplying the word from the memory of higher rank, one of the preceding values of the parameter q is selected (148) in the queue and steps b) to f) are executed once again by using the preceding value selected for the parameter q instead of the current value of this parameter q.

12. Method according to Claim 11, wherein, when a line label corresponding to the received line label is found in the cache memory by using one of the preceding values of the parameter q, the method comprises the replacement (150) of one of the lines of the set situated at the transformed set address obtained from the received value of the parameter q by the line associated with this line label corresponding to the received line label found in the cache memory by using one of the preceding values of the parameter q.

13. Method according to Claim 11 or 12, wherein the number R is between 4 and 16.

14. Method according to Claims 9 and 11 taken together, wherein the number M is equal to the number R.

15. Unit (14; 200; 250) for managing a cache memory of an electronic computer, this unit being configured to perform the following steps each time that a first process and a second process, executed by the electronic computer, want to read a word shared in read-only mode in the cache memory:
a) the reception of a request containing an address of the word to be read, this address comprising:
- a line label,
- a set address, this set address belonging to a first set of s different values, in which the number s is an integer number greater than two,
b) the identification of a transformation function as a function of a value of a parameter q selected as a function of an identifier of the process, each value of the parameter q identifying a respective bijective transformation function which swaps at least 50% of the values of the first set, the selection of the value of the parameter q having previously been made by using prestored relationships which associate a value of the parameter q with each identifier of a process, then
c) the transformation of the received set address into a set address transformed using the transformation function identified by the value of the parameter q, then
d) the selection of one or more line labels stored in the cache memory at the transformed set address, then
e) the comparison of the received line label to the line label or labels selected as a function of the transformed set address, to determine if one of these selected line labels corresponds to the received line label,
f) when none of the selected labels corresponds to the received line label, the triggering of a cache fault and the supply of the word from a memory of higher rank, and when, on the contrary, one of the selected line labels corresponds to the received line label, the reading in the cache memory of the word in the line associated with the line label which corresponds to the received line label,
at least during the first execution of steps a) to f) for the first process and the second process, the prestored relationships associate the identifiers of the first process and the second process with one and the same value of the parameter q such that, when the received address of the word to be read is the same for the first process and the second process, then the received values of the parameter q are the same and the transformed set addresses used to read this word are the same,
**characterized in that** management unit (14; 200; 250) is also configured to perform the following steps:
- when the second process modifies the state of the cache memory, the updating of the value of at least one indicator associated specifically with this second process, the value of this indicator being representative of a particular modification of the state of the cache memory triggered by the second process, and
- the comparison of the value of this indicator to a predetermined threshold and, when this predetermined threshold is exceeded, the detection of an abnormal use of the cache memory by the second process and, when the value of the indicator does not cross the predetermined threshold, the absence of detection of an abnormal use,
- in response to the detection of an abnormal use of the cache memory by the second process, the management unit triggers the modification of the prestored relationships to associate, with the identifier of the second process, a value of the parameter q different from the value of the parameter q associated with the first process such that, after this modification, when the received address of the word to be read is the same for the first process and the second process, then the transformed set addresses used to read this word are different, and
- in the absence of detection of an abnormal use, the management unit does not trigger the modification of the prestored relationships and these are left unchanged.
